# EUROPEAN PATENT APPLICATION

(11) **EP 4 414 430 A1**
(43) Date of publication of application: **14.08.2024**
(21) Application number: 23155826.3
(22) Date of filing: 09.02.2023
(51) Int. Cl.: C09D 7/46, C09D 7/63, C09D 167/08, C09F 9/00

(54) **DRIER AND ANTI-SKINNING AGENT SYSTEM FOR A COATING COMPOSITION**

(71) Applicant: PPG Europe B.V., 1422 AD Uithoorn (NL)
(72) Inventor: ANG, Tjian Hong, Almere (NL); WEIJNEN, John, Alphen aan den Rijn (NL)
(74) Representative: Appleyard Lees IP LLP

(57) **Abstract**

A drier and anti-skinning agent system for an oxidatively drying binder-based coating composition comprising:
a. a drying agent comprising an iron ligand complex and/or a manganese ligand complex; and
b. an anti-skinning agent comprising
i. an alkanolamine of formula (I) 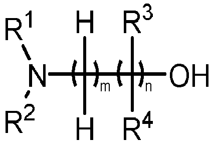 wherein each R¹ and R² independently represent hydrogen, an alkyl, alkenyl, an aryl, or an arylalkyl;
wherein each R³ and R⁴ independently represent hydrogen, or an alkyl; wherein m represents 0 or 1; and
wherein n represents an integer from 1 to 10; and

ii. (A) and/or (8)
wherein (A) is a mercaptan of formula (II) 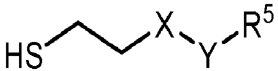 wherein R⁵ represents an alkyl or an arylalkyl;
wherein X represents a methylene or a carbonyl group; and
wherein Y represents methylene group or oxygen; and

wherein (8) is a diketone of formula (III) 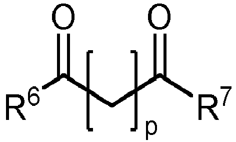 or a diketone of formula (IV) 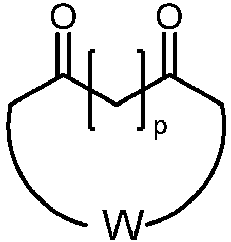 where p represents 0, 1 or 2; and
wherein each of R⁶ and R⁷ independently represent an alkyl, an aryl, or an arylalkyl; and
wherein W represents an alkylene group, optionally substituted with one or more substituents selected from the group comprising an alkyl, -OH, and a halogen.

## Description

The present invention relates to a drier and anti-skinning agent system for a coating composition. In particular, the present invention relates to a drier and anti-skinning agent system for oxidatively drying binder-based coatings. The present invention also extends to a coating composition comprising the drier and anti-skinning agent system, and to a substrate coated with a coating derivable from the coating composition.

### BACKGROUND OF THE INVENTION

Autoxidisable alkyd resins are long-established binder polymers for film-forming coating compositions acknowledged for their aesthetic properties, low surface tension (which enables the wetting of and adhesion on a wide variety of substrates and facilitates pigment wetting), applicability by various techniques, and cost-effectiveness. Because of these properties, alkyd resins are the most widely used air drying binders in coating compositions. Autoxidisable alkyd resins comprise drying or semi-drying unsaturated fatty acids or oils, which are chemically grafted to the polyester backbone composed of polyols and polycarboxylic acids. When the coating composition is applied to a substrate, the drying process starts by solvent evaporation and the unsaturated fatty acid side chains of the binder undergo autoxidation and subsequently form cross-links between the polymer chains resulting in a solid and coherently dried film. The drying process of autoxidisable alkyd resins takes place in the presence of oxygen under ambient or forced drying conditions, whereby the presence of oxygen is essential. The time for such compositions to dry depends on the concentration and type of unsaturated oil or fatty acids used to prepare the resin. Autoxidation and crosslinking of the unsaturated oil/fatty acid side chains can proceed unaided, but the time for drying is generally found to be unacceptably long for many practical applications. The curing is significantly accelerated by the addition of a metal-based drying catalyst, commonly referred to as a "drier" or "siccative".

These metal salts, containing either alkaline, alkaline-earth or transition metals, affect the autoxidation of the binder with air and/or catalyse cross-linking of the unsaturated moieties. The drying time can consequently be reduced from days to hours. The presence of efficient driers is therefore essential for the drying of air-drying coating compositions.

These catalytic oil drying agents are commonly divided into three main classes according to their catalytic activity: primary driers, which all possess significant catalytic activity, coordination driers, which promote the film-forming process by bridging two or multiple polymer chains, and secondary driers, which have little to no catalytic effect when used on their own but assist the drying process by activating the metal in the primary drier.

Examples of known primary drier salts include carboxylates of transition metals such as cobalt, copper, iron, manganese, and vanadium, which have at least two accessible valence states. In the radical curing process, the decomposition of the fatty acid peroxides catalyzed by metal ions generate fatty acid oxide radicals and fatty acid peroxide radicals. In this process, the metal catalyst is recurrently converted from the lower to the higher oxidation state and back again.

Primary driers based on cobalt are the most widely used because of their unfailing performance at ambient temperature. However, because of the suspected carcinogenicity of cobalt carboxylates, it is desired to find alternative drier compounds that show an equal or even better drying performance than that of cobalt driers. The imminent reclassification of cobalt metal and cobalt carboxylates as Class 1B carcinogenic materials has accelerated the desire for and development of cobalt-free metal driers for alkyds.

Primary drying agents based on iron ligand complexes containing tetradentate, pentadentate or hexadentate nitrogen donor ligands have been developed as alternatives to cobalt based drying agents for air-drying alkyd resins. Those iron based primary drying agents have shown improved drying behavior under ambient conditions, and higher initial whiteness and lower yellowing tendency compared to other technologies. However, the catalytic activity of these driers can be difficult to control, leading to untimely skin formation and, as such, coating compositions with diminished storage stabilities.

A liquid coating composition containing resins based on unsaturated fatty acids and metal driers, when exposed to air, will rapidly convert into a drying polymeric matrix. For the formation of surface skin on air-drying coatings by oxidative polymerization processes oxygen is required. Even in a closed container, in which the ullage (or headspace) between the product surface and the closed lid is sufficiently large, a tough rubber-like skin on the surface of the liquid coating material will develop. Skinning in the paint container during storage results in loss of quality and quantity of the coating product. Removal of the skin is both awkward and time consuming and results in a waste of a substantial amount of paint. Moreover, the concentration of driers found in the skin is disproportionate and removal will lead to a prolongation of drying time of the remaining coating material.

To prevent the untimely oxidative drying that leads to skinning of the alkyd paint, and to improve the stability during storage, anti-skinning agents are included in coating formulations. Oximes, and in particular methyl ethyl ketoxime (MEKO), are known to reduce skin formation considerably, particularly in alkyd formulations containing cobalt-based driers. Although the mechanism associated with the anti-skinning performance of oximes is still not accepted unanimously, the prevailing hypothesis concerns the association of the oxime to the free coordination sites of the metal carboxylate thereby suppressing the activity of the catalyst. During storage in a closed container the weak metal - oxime complex will stay intact. However, after the can is opened for paint application, the complex will dissociate and the relatively volatile oxime will be released into the surrounding atmosphere.

However, concerns have been raised relating to the toxicity of MEKO. This substance has been identified as a skin sensitizer and a suspected carcinogen and recently a proposal has been adopted to revise the harmonized classification of MEKO from carcinogenic category 2 to the more severe category 1B. In addition, the German Hazardous Substances Commission has reduced the Occupational Exposure Limit (OEL) for MEKO to a level of only 0.3 ppm. Alternative anti-skinning agents such as anti-oxidants and higher molecular weight oximes of lower partial vapor pressure are inadequate alternatives. The concentration of anti-oxidants required in a formulation in order to be effective as anti-skinning agents results in substantial drying retardation. The same side-effect is observed in the case of high boiling oximes.

### SUMMARY OF THE INVENTION

According to the present invention there is provided a drier and anti-skinning agent system for an oxidatively drying binder-based coating composition comprising:
a. a drying agent comprising an iron ligand complex and/or a manganese ligand complex;
b. an anti-skinning agent comprising
   i. an alkanolamine of formula (I) 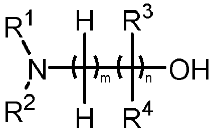
      wherein each R¹ and R² independently represent hydrogen, an alkyl, alkenyl, an aryl, or an arylalkyl;
      wherein each R³ and R⁴ independently represent hydrogen, or an alkyl;
      wherein m represents 0 or 1;
      wherein n represents an integer from 1 to 10; and
   ii. (A) and/or (B)
      wherein (A) is a mercaptan of formula (II) 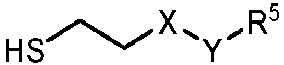
      wherein R⁵ represents an alkyl or an arylalkyl;
      wherein X represents a methylene or a carbonyl group;
      wherein Y represents methylene group or oxygen; and
      wherein (B) is a diketone of formula (III) 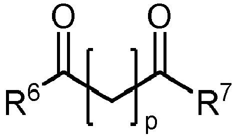
      or a diketone of formula (IV) 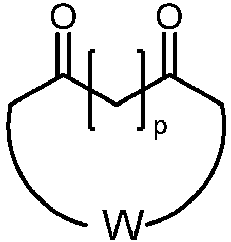
      where p represents 0, 1 or 2;
      wherein each of R⁶ and R⁷ independently represent an alkyl, an aryl, or an arylalkyl; and
      wherein W represents an alkylene group, optionally substituted with one or more substituents selected from the group comprising an alkyl, -OH, and a halogen.

There is also provided a drier and anti-skinning agent system for an oxidatively drying binder-based coating composition comprising:
a. a drying agent comprising an iron ligand complex and/or a manganese ligand complex;
b. an anti-skinning agent comprising a mercaptan of formula (II) 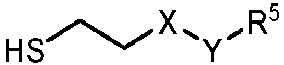
   wherein R⁵ represents an alkyl or an arylalkyl;
   wherein X represents a methylene or a carbonyl group; and
   wherein Y represents methylene group or oxygen.

There is also provided a coating composition comprising an oxidatively drying binder and the drier and anti-skinning agent systems disclosed herein.

There is also provided a substrate having a coating on at least a portion thereof, the coating being derived from a coating composition disclosed herein.

There is also provided a method of preventing or mitigating skin formation in an oxidatively drying binder-based coating composition, the method comprising using a drier and anti-skinning agent system comprising:
a. a drying agent comprising an iron ligand complex and/or a manganese ligand complex;
b. an anti-skinning agent comprising
   i. an alkanolamine of formula (I) 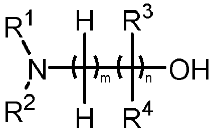
      wherein each R¹ and R² independently represent hydrogen, an alkyl, alkenyl, an aryl, or an arylalkyl;
      wherein each R³ and R⁴ independently represent hydrogen, or an alkyl;
      wherein m represents 0 or 1;
      wherein n represents an integer from 1 to 10; and
   ii. (A) and/or (B)
      wherein (A) is a mercaptan of formula (II) 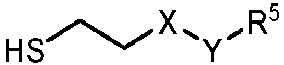
      wherein R⁵ represents an alkyl or an arylalkyl;
      wherein X represents a methylene or a carbonyl group;
      wherein Y represents methylene group or oxygen; and
      wherein (B) is a diketone of formula (III) 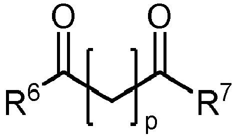
      or a diketone of formula (IV) 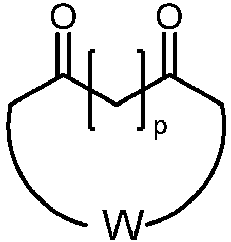
      where p represents 0, 1 or 2;
      wherein each of R⁶ and R⁷ independently represent an alkyl, an aryl, or an arylalkyl; and
      wherein W represents an alkylene group, optionally substituted with one or more substituents selected from the group comprising an alkyl, -OH, and a halogen.

There is also provided a method of preventing or mitigating skin formation in an oxidatively drying binder-based coating composition, the method comprising using a drier and anti-skinning agent system comprising:
a. a drying agent comprising an iron ligand complex and/or a manganese ligand complex;
b. an anti-skinning agent comprising a mercaptan of formula (II) 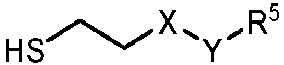
   wherein R⁵ represents an alkyl or an arylalkyl;
   wherein X represents a methylene or a carbonyl group; and
   wherein Y represents methylene group or oxygen.

There is also provided the use of a drier and anti-skinning agent system comprising:
a. a drying agent comprising an iron ligand complex and/or a manganese ligand complex;
b. an anti-skinning agent comprising
   i. an alkanolamine of formula (I) 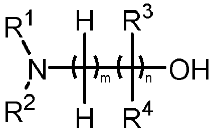
      wherein each R¹ and R² independently represent hydrogen, an alkyl, alkenyl, an aryl, or an arylalkyl;
      wherein each R³ and R⁴ independently represent hydrogen, or an alkyl;
      wherein m represents 0 or 1; and
      wherein n represents an integer from 1 to 10; and
   ii. (A) and/or (B)
      wherein (A) is a mercaptan of formula (II) 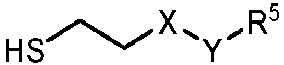
      wherein R⁵ represents an alkyl or an arylalkyl;
      wherein X represents a methylene or a carbonyl group; and
      wherein Y represents methylene group or oxygen; and
      wherein (B) is a diketone of formula (III) 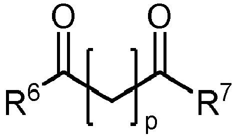
      or a diketone of formula (IV) 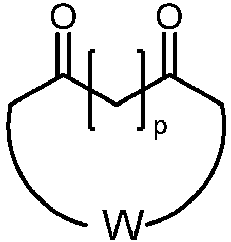
      where p represents 0, 1 or 2; and
      wherein each of R⁶ and R⁷ independently represent an alkyl, an aryl, or an arylalkyl; and
      wherein W represents an alkylene group, optionally substituted with one or more substituents selected from the group comprising an alkyl, -OH, and a halogen;
to prevent or mitigate skin formation in an oxidatively drying binder-based coating composition.

There is also provided the use of a drier and anti-skinning agent system comprising:
a. a drying agent comprising an iron ligand complex and/or a manganese ligand complex;
b. an anti-skinning agent comprising a mercaptan of formula (II) 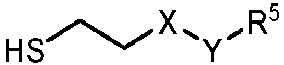
   wherein R⁵ represents an alkyl or an arylalkyl;
   wherein X represents a methylene or a carbonyl group; and
   wherein Y represents methylene group or oxygen,
to prevent or mitigate skin formation in an oxidatively drying binder-based coating composition.

There is also provided a coating composition comprising:
aa. an oxidatively drying binder
a. drying agent comprising an iron ligand complex and/or a manganese ligand complex;
b. an anti-skinning agent comprising
   i. an alkanolamine of formula (I) 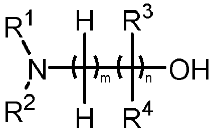
      wherein each R¹ and R² independently represent hydrogen, an alkyl, alkenyl, an aryl, or an arylalkyl;
      wherein each R³ and R⁴ independently represent hydrogen, or an alkyl;
      wherein m represents 0 or 1; and
      wherein n represents an integer from 1 to 10; and
   ii. (A) and/or (B)
      wherein (A) is a mercaptan of formula (II) 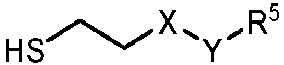
      wherein R⁵ represents an alkyl or an arylalkyl;
      wherein X represents a methylene or a carbonyl group; and
      wherein Y represents methylene group or oxygen; and
      wherein (B) is a diketone of formula (III) 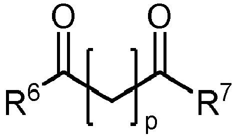
      or a diketone of formula (IV) 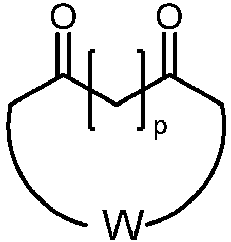
      where p represents 0, 1 or 2; and
      wherein each of R⁶ and R⁷ independently represent an alkyl, an aryl, or an arylalkyl; and
      wherein W represents an alkylene group, optionally substituted with one or more substituents selected from the group comprising an alkyl, -OH, and a halogen.

There is also provided a coating composition comprising:
aa. an oxidatively drying binder
b. a drying agent comprising an iron ligand complex and/or a manganese ligand complex;
c. an anti-skinning agent comprising a mercaptan of formula (II) 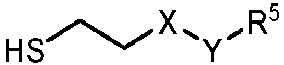
   wherein R⁵ represents an alkyl or an arylalkyl;
   wherein X represents a methylene or a carbonyl group;
   wherein Y represents methylene group or oxygen.

### DETAILED DESCRIPTION OF THE INVENTION

When describing the compositions of the disclosure, the terms used are to be construed in accordance with the following definitions, unless a context dictates otherwise.

As used herein, unless otherwise expressly specified, all numbers such as those expressing values, ranges, amounts or percentages may be read as if prefaced by the word "about", even if the term does not expressly appear. Also, the recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

As used in the specification and the appended claims, the singular forms "a", "an," and "the" include both singular and plural referents unless the context clearly dictates otherwise. By way of example, "a drying agent" means one drying agent or more than one drying agent. By way of example, "an anti-skinning agent" means one anti-skinning agent or more than one anti-skinning agent. References to a number when used in conjunction with comprising language include compositions comprising said number or more than said number References to a number when used in conjunction with comprising language include compositions comprising said number or more than said number.

The terms "comprising", "comprises" and "comprised of" as used herein are synonymous with "including", "includes" or "containing", "contains", and are inclusive or open-ended and do not exclude additional, non-recited members, elements or method steps. Additionally, although the present invention has been described in terms of "comprising", the coating compositions detailed herein may also be described as "consisting essentially of" or "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

The term "about" as used herein when referring to a measurable value such as a parameter, an amount, a temporal duration, and the like, indicate that a value includes the standard deviation of error for the device or method being employed to determine the value. The term "about" is meant to encompass variations of +/-10% or less, +/-5% or less, or +/-0.1 % or less of and from the specified value, insofar such variations are appropriate to perform in the disclosure. It is to be understood that the value to which the modifier "about" refers is itself also specifically disclosed.

Unless otherwise defined, all terms used in the disclosure, including technical and scientific terms, have the meaning as commonly understood by one of ordinary skill in the art to which this disclosure belongs. By means of further guidance, definitions for the terms used in the description are included to better appreciate the teaching of the present disclosure. All publications referenced herein are incorporated by reference thereto.

Whenever the term "substituted" is used herein, it is meant to indicate that one or more hydrogens on the atom indicated in the expression using "substituted" is replaced with a selection from the indicated group, provided that the indicated atom's normal valency is not exceeded, and that the substitution results in a chemically stable compound, i.e. a compound that is sufficiently robust to survive isolation from a reaction mixture. When the term "optionally substituted" is used herein at the start of a list of chemical species it is meant to indicate that all of the species in the list which can be substituted may be optionally substituted; that is it is not meant that only the first species mentioned in the list may be optionally substituted. The term optionally substituted when used herein means unsubstituted or substituted with a suitable group.

Where groups can be substituted, substituents may be selected from but not limited to, for example, the group comprising halogen, alkyl, haloalkyl, haloalkyloxy, hydroxyl, hydroxyalkyl, amino, aminoalkyl, carboxyl, a nitro group, a nitrile group, an imine, an ether group, a silyl group, a silyl ether group, a sulfoxide group, a sulfonyl group, a sulfinate group or an acetylide group or an optionally substituted alkyl, alkenyl, alkynyl, haloalkyl, aryl, heteroaryl, alkoxy, aryloxy, alkylthio, arylthio, alicyclic or heteroalicyclic group.

For the purpose of the present disclosure, an aliphatic group is a hydrocarbon moiety that may be straight chain or branched and may be completely saturated, or contain one or more units of unsaturation, but which is not aromatic. The term "unsaturated" means a moiety that has one or more double and/or triple bonds. The term "aliphatic" is therefore intended to encompass alkyl, alkenyl or alkynyl groups, and combinations thereof.

The term "hydroxyl" or "hydroxy" as used herein refers to the group -OH.

The term "carboxy" or "carboxyl" as used herein refers to the group -C(=O)OH.

The term "alk" or "alkyl", as used herein unless otherwise defined, relates to saturated hydrocarbon radicals being straight, branched, cyclic or polycyclic moieties or combinations thereof and contain 1 to 20 carbon atoms, such as 1 to 10 carbon atoms, such as 1 to 8 carbon atoms, such as 1 to 6 carbon atoms, or even 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having, such as up to 4, double bonds, being straight, branched, cyclic or polycyclic moieties or combinations thereof and containing from 2 to 18 carbon atoms, such as 2 to 10 carbon atoms, such as from 2 to 8 carbon atoms, such as 2 to 6 carbon atoms, or even 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or alkyl, and/or be interrupted by oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having, such as up to 4, triple bonds, being straight, branched, cyclic or polycyclic moieties or combinations thereof and having from 2 to 18 carbon atoms, such as 2 to 10 carbon atoms, such as from 2 to 8 carbon atoms, such as from 2 to 6 carbon atoms, or even from 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C≡CH, becomes ethynylene, -C=C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

When the term "alkyl" is used as a suffix following another term, as in "hydroxyalkyl," this is intended to refer to an alkyl group, as defined above, being substituted with one or two substituent(s) selected from the other, specifically-named group, also as defined herein. The term "hydroxyalkyl" therefore refers to a -R¹³-OH group wherein R¹³ is alkylene as defined herein. The term "alkoxy" or "alkyloxy", as a group or part of a group, refers to a group having the Formula -OR¹⁴ wherein R¹⁴ is alkyl as defined herein above.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

When the suffix "ene" is used in conjunction with a chemical group, e.g. "alkylene", this is intended to mean the group as defined herein having two points of attachment to other groups. As used herein, the term "C₁₋₁₂alkylene", by itself or as part of another substituent, refers to C₁₋₁₂alkyl groups that are divalent, i.e., with two points of attachment to two other groups. Alkylene groups may be linear or branched and may be substituted as indicated herein. Non-limiting examples of alkylene groups include methylene (-CH₂-), ethylene (-CH₂-CH₂-), methylmethylene (-CH(CH₃)-), 1-methyl-ethylene (-CH(CH₃)-CH₂-), n-propylene (-CH₂-CH₂-CH₂-), 2-methylpropylene (-CH₂-CH(CH₃)-CH₂-), 3-methylpropylene (-CH₂-CH₂-CH(CH₃)-), n-butylene (-CH₂-CH₂-CH₂-CH₂-), 2-methylbutylene (-CH₂-CH(CH₃)-CH₂-CH₂-), 4-methylbutylene (-CH₂-CH₂-CH₂-CH(CH₃)-), pentylene and its chain isomers, hexylene and its chain isomers, heptylene and its chain isomers, octylene and its chain isomers, nonylene and its chain isomers, decylene and its chain isomers, undecylene and its chain isomers, dodecylene and its chain isomers. As set out above in relation to the terms "heteroalkyl", "heteroalkenyl" and "heteroalkynyl", the terms "heteroalkylene", "heteroalkenylene" and "heteroalkynylene" refer *mutatis mutandis* to an alkylene, alkenylene or alkynylene group containing one or more S, N, O, P, or Si atoms.

The term "amino" refers to the group -NH₂.

The term "ether" includes both mono and polyethers and refers to groups having a chain containing carbon and oxygen and each of these units suitably comprises 1 to 12 carbons for each oxygen atom. Examples are dimethyl, diethyl and dipropyl ethers, polyethyleneoxide, polypropyleneoxide, polyethylene glycol, polybutyleneoxide.

The term "halo" or "halogen" as a group or part of a group is generic for fluoro, chloro, bromo, and iodo, suitably to F, Cl, Br, and I, more suitably to F, Cl, and Br. For example, the term "haloalkyl" as a group or part of a group, refers to an alkyl group having the meaning as defined above wherein one or more hydrogens are replaced with one or more halogen as defined above.

The term "cycloalkyl", as a group or part of a group, refers to a cyclic alkyl group, that is a monovalent, saturated, hydrocarbyl group having 1 or more cyclic structure, and comprising from 3 to 12 carbon atoms, suitably from 3 to 9 carbon atoms, suitably from 3 to 6 carbon atoms, suitably from 5 to 6 carbon atoms. Cycloalkyl includes all saturated hydrocarbon groups containing 1 or more rings, including monocyclic or bicyclic groups. The further rings of multi- ring cycloalkyls may be either fused, bridged and/or joined through one or more spiro atoms. When a subscript is used herein following a carbon atom, the subscript refers to the number of carbon atoms that the named group may contain. For example, the term "C₃₋₆cycloalkyl", a cyclic alkyl group comprising from 3 to 6 carbon atoms, suitably from 5 to 6 carbon atoms. Examples of cycloalkyl groups include but are not limited to cyclopropyl, cyclobutyl, cyclopentyl, cyclohexyl. When the suffix "ene" is used in conjunction with a cycloalkyl group, i.e. cycloalkylene, this is intended to mean the cycloalkyl group as defined herein having two single bonds as points of attachment to other groups.

The term "iron ligand complex" or "manganese ligand complex" refers to an iron complex or a manganese ligand complex comprising a ligand that acts as a donor of an electron lone pair to form a coordination complex thereby increasing the stability of the manganese or iron ion-containing material in the composition.

The term "drier and anti-skinning agent system" refers to a composition comprising a drying agent and an anti-skinning agent. The present inventors have found that the drier and anti-skinning agent systems of the invention in autoxidizable binder based compositions improves the drying times of the composition, while simultaneously providing prolonged skin-free periods.

The term "drier" refers to organometallic compounds that are soluble in organic solvents and binders. They are added to unsaturated oils and binders in order to appreciably reduce their curing times, i.e. the transition of their liquid films to the solid phase. Driers are available either as solids or in solution (siccatives). Suitable solvents are organic solvents, fatty acid esters and oxygenated solvents as glycol ethers. The driers are present in amounts expressed as weight percent of the metal atom based on the weight of binder solids (or resin) unless stated otherwise.

As used herein, the term "substantially free" means that the material being discussed is present in the composition, if at all, as an incidental impurity. In other words, the material does not affect the properties of the composition. As used herein, the term "completely free" means that the material being discussed is not present in the composition at all.

Suitable features of the drier and anti-skinning agent system of the disclosure are now set forth.

### DRIER AND ANTI-SKINNING AGENT SYSTEM

The drying agent comprises an iron ligand complex and/or a manganese ligand complex. The iron ligand complex and/or a manganese ligand complex may be substantially free of cobalt.

The drying agent comprising an iron ligand complex and/or a manganese ligand complex may comprise a primary drying agent. The primary drying agent may be substantially free of cobalt.

The drier and anti-skinning agent system may comprise less than 0.001 wt% of cobalt, such as less than 0.0001 wt% of cobalt, such as less than 0.00001, 0.000001 or 0.0000001 wt% of cobalt based on the total solid weight of the oxidatively drying binder. The drying agent comprising a primary drying agent or an iron ligand complex and/or a manganese ligand complex may be completely free of cobalt.

The drier and anti-skinning agent system may comprise a further drier comprising an organic salt of one or more of manganese, cerium, zirconium and calcium.

The drier and anti-skinning agent system of the invention may comprise a further drier comprising an organic salt of manganese and/or cerium.

The drier and anti-skinning agent system may comprise:
a) a drying agent comprising an iron ligand complex and/or a manganese ligand complex; and
b) an anti-skinning agent comprising
   i. an alkanolamine of formula (I)
   ii. a mercaptan of formula (II).

The drier and anti-skinning agent system may comprise:
a) a drying agent comprising an iron ligand complex and/or a manganese ligand complex; and
b) an anti-skinning agent comprising
   i. an alkanolamine of formula (I); and
   ii. a mercaptan of formula (V): 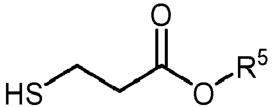 wherein R⁵ represents an alkyl or an arylalkyl

The drier and anti-skinning agent system may comprise:
a) a drying agent comprising an iron ligand complex and/or a manganese ligand complex; and
b) an anti-skinning agent comprising
   i. an alkanolamine of formula (I); and
   ii. a diketone of formula (III) or a diketone of formula (IV).

The drier and anti-skinning agent system may comprise:
a) a drying agent comprising an iron ligand complex and/or a manganese ligand complex; and
b) an anti-skinning agent comprising
   i. an alkanolamine of formula (I); and
   ii. a mercaptan of formula (II) or formula (V); and
   iii. a diketone of formula (III) or a diketone of formula (IV).

The drier and anti-skinning agent system may comprise:
a. a drying agent comprising an iron ligand complex and/or a manganese ligand complex; and
b. an anti-skinning agent comprising a mercaptan of formula (II) or formula (V)

The drier and anti-skinning agent system may comprise:
a) a drying agent comprising an iron ligand complex or a manganese ligand complex; and
b) an anti-skinning agent comprising
   i. an alkanolamine of formula (I); and
   ii. a mercaptan of formula (II) or a mercaptan of formula (V).

The drier and anti-skinning agent system may comprise:
a) a drying agent comprising an iron ligand complex or a manganese ligand complex; and
b) an anti-skinning agent comprising
   i. an alkanolamine of formula (I); and
   ii. a diketone of formula (III) or a diketone of formula (IV).

The drier and anti-skinning agent system may comprise:
a) a drying agent comprising an iron ligand complex or a manganese ligand complex; and
b) an anti-skinning agent comprising
   i. an alkanolamine of formula (I); and
   ii. a mercaptan of formula (II) or formula (V); and
   iii. a diketone of formula (III) or a diketone of formula (IV).

The drier and anti-skinning agent system of the invention may comprise:
a) a drying agent comprising an iron ligand complex or a manganese ligand complex;
b) an anti-skinning agent comprising a mercaptan of formula (II) or formula (V)

The drier and anti-skinning agent system of the invention may comprise:
a) a drying agent comprising an iron ligand complex; and
b) an anti-skinning agent comprising
   i. an alkanolamine of formula (I)
   ii. a mercaptan of formula (II) or a mercaptan of formula (V).

The drier and anti-skinning agent system of the invention may comprise:
a) a drying agent comprising an iron ligand complex; and
b) an anti-skinning agent comprising
   i. an alkanolamine of formula (I); and
   ii. a diketone of formula (III) or a diketone of formula (IV).

The drier and anti-skinning agent system of the invention may comprise:
a) A drying agent comprising an iron ligand complex; and
b) an anti-skinning agent comprising
   i. an alkanolamine of formula (I); and
   ii. a mercaptan of formula (II) or formula (V); and
   iii. a diketone of formula (III) or a diketone of formula (IV).

The drier and anti-skinning agent system may comprise:
a) a drying agent comprising an iron ligand complex;
b) an anti-skinning agent comprising a mercaptan of formula (II) or formula (V)

The drier and anti-skinning agent system may comprise:
a) a drying agent comprising a manganese ligand complex; and
b) an anti-skinning agent comprising
   i. an alkanolamine of formula (I)
   ii. a mercaptan of formula (II) or a mercaptan of formula (V).

The drier and anti-skinning agent system may comprise:
a) a drying agent comprising a manganese ligand complex; and
b) an anti-skinning agent comprising
   i. an alkanolamine of formula (I); and
   ii. a diketone of formula (III) or a diketone of formula (IV).

The drier and anti-skinning agent system may comprise:
a) A drying agent comprising a manganese ligand complex; and
b) an anti-skinning agent comprising
   i. an alkanolamine of formula (I); and
   ii. a mercaptan of formula (II) or formula (V); and
   iii. a diketone of formula (III) or a diketone of formula (IV).

The drier and anti-skinning agent system may comprise:
a) a drying agent comprising a manganese ligand complex;
b) an anti-skinning agent comprising a mercaptan of formula (II) or formula (V).

### PRIMARY DRYING AGENTS

The iron and/or manganese ligand complexes may be primary drying agents.

The above defined primary drying agents may promote the curing (or oxidative polymerisation) of an autoxidizable resin. The above defined primary drying agents may reduce the drying or curing time of the alkyd resin.

The iron and/or manganese may have at least two accessible valence states. The primary drying agent may be selected from a manganese ligand complex, and/or an iron ligand complex. Such manganese and/or iron ligand complexes may comprise a salt of an organic or an inorganic anion (and mixtures thereof). Examples of suitable organic anions for forming the salts include carboxylates (for example octoates, napthenates, neodecanoates, linoleates and tallates) and β-diketonates (for example acetylacetonates, benzoylacetones and dibenzoylmethanes). The primary drying agent may comprise a complex of an organic or inorganic salt of a manganese ion and/or iron ion and a bidentate, tridentate, tetradentate, pentadentate or hexadentate nitrogen ligand. Suitable inorganic anions for forming the salts include phosphates and halides (for example chlorides or bromides).

Suitable iron and/or manganese ligand complexes can be prepared according to known procedures or can be obtained commercially. Examples of suitable commercially available primary drying agents that comprise a manganese ligand complex include Nuodex^{®} Drycoat (Venator). Examples of suitable commercially available primary drying agents that comprise an iron ligand complex include Borchi^{®} OXY-Coat (Borchers).

The percentage of manganese, and/or iron in the coating composition may be dependent on the type of oxidatively drying binder used in the coating composition.

A coating composition comprising the drier and anti-skinning agent system may comprise from 0.00007 to 0.07 % by weight or greater of manganese and/or iron based on the total solid weight of the oxidatively drying binder.

A coating composition comprising the drier and anti-skinning agent system may comprise from 0.00007 to 0.07 % by weight, such as from 0.000075 to 0.065 % by weight, such as from 0.00008 to 0.06 % by weight, such as from 0.000085 to 0.055 % by weight, such as from 0.00009 to 0.05 % by weight of manganese and/or iron based on the total solid weight of the oxidatively drying binder.

A coating composition comprising the drier and anti-skinning agent system may comprise at least 0.00007 % by weight, such as at least 0.000075 % by weight, such as at least 0.00008 % by weight, such as at least 0.000085 % by weight, such as at least 0.00009 % by weight of manganese and/or iron based on the total solid weight of the oxidatively drying binder. A coating composition comprising the drier and anti-skinning agent system may comprise up to 0.07 % by weight, such as up to 0.065 % by weight, such as up to 0.06 % by weight, such as up to 0.055 % by weight, such as up to 0.05 % by weight of manganese and/or iron based on the total solid weight of the oxidatively drying binder. A coating composition comprising the drier and anti-skinning agent system may comprise from 0.00007 to 0.07 % by weight, such as from 0.00007 to 0.065 % by weight, such as from 0.00007 to 0.06 % by weight, such as from 0.00007 to 0.055 % by weight, such as from 0.00007 to 0.05 % by weight of manganese and/or iron based on the total solid weight of the oxidatively drying binder. A coating composition comprising the drier and anti-skinning agent system may comprise from 0.000075 to 0.07 % by weight, such as from 0.000075 to 0.065 % by weight, such as from 0.000075 to 0.06 % by weight, such as from 0.000075 to 0.055 % by weight, such as from 0.000075 to 0.05 % by weight of manganese and/or iron based on the total solid weight of the oxidatively drying binder. A coating composition comprising the drier and anti-skinning agent system may comprise from 0.00008 to 0.07 % by weight, such as from 0.00008 to 0.065 % by weight, such as from 0.00008 to 0.06 % by weight, such as from 0.00008 to 0.055 % by weight, such as from 0.00008 to 0.05 % by weight of manganese and/or iron based on the total solid weight of the oxidatively drying binder. A coating composition comprising the drier and anti-skinning agent system may comprise from 0.000085 to 0.07 % by weight, such as from 0.000085 to 0.065 % by weight, such as from 0.000085 to 0.06 % by weight, such as from 0.000085 to 0.055 % by weight, such as from 0.000085 to 0.05 % by weight of manganese and/or iron based on the total solid weight of the oxidatively drying binder. A coating composition comprising the drier and anti-skinning agent system may comprise from 0.00009 to 0.07 % by weight, such as from 0.00009 to 0.065 % by weight, such as from 0.00009 to 0.06 % by weight, such as from 0.00009 to 0.055 % by weight, such as from 0.00009 to 0.05 % by weight of manganese and/or iron based on the total solid weight of the oxidatively drying binder.

A coating composition comprising the drier and anti-skinning agent system may comprise from 0.00025 to 0.06 % by weight, such as from 0.000255 to 0.055 % by weight, such as from 0.00026 to 0.05 % by weight, such as from 0.000265 to 0.045 % by weight, such as from 0.00027 to 0.04 % by weight of manganese and/or iron based on the total solid weight of the oxidatively drying binder.

A composition comprising the drier and anti-skinning agent system may comprise up to 1 % by weight of manganese and/or iron based on the total solid weight of the oxidatively drying binder.

A coating composition comprising the drier and anti-skinning agent system may comprise from 0.00007 to 0.00475 % by weight of iron based on the total solid weight of the oxidatively drying binder.

A coating composition comprising the drier and anti-skinning agent system may comprise from 0.00007 to 0.00475 % by weight, such as from 0.000075 to 0.0047 % by weight, such as from 0.00008 to 0.00465 % by weight, such as from 0.000085 to 0.0046 % by weight, such as from 0.00009 to 0.00455 % by weight of iron based on the total solid weight of the oxidatively drying binder.

A coating composition comprising the drier and anti-skinning agent system may comprise at least 0.00007 % by weight, such as at least 0.000075 % by weight, such as at least 0.00008 % by weight, such as at least 0.000085 % by weight, such as at least 0.00009 % by weight of iron based on the total solid weight of the oxidatively drying binder. A coating composition comprising the drier and anti-skinning agent system may comprise up to 0.00475 % by weight, such as up to 0.0047 % by weight, such as up to 0.00465 % by weight, such as up to 0.0046 % by weight, such as up to 0.00455 % by weight of iron based on the total solid weight of the oxidatively drying binder. A coating composition comprising the drier and anti-skinning agent system may comprise from 0.00007 to 0.00475 % by weight, such as from 0.00007 to 0.0047 % by weight, such as from 0.00007 to 0.00465 % by weight, such as from 0.00007 to 0.0046 % by weight, such as from 0.00007 to 0.00455 % by weight of iron based on the total solid weight of the oxidatively drying binder. A coating composition comprising the drier and anti-skinning agent system may comprise from 0.000075 to 0.00475 % by weight, such as from 0.000075 to 0.0047 % by weight, such as from 0.000075 to 0.00465 % by weight, such as from 0.000075 to 0.0046 % by weight, such as from 0.000075 to 0.00455 % by weight of iron based on the total solid weight of the oxidatively drying binder. A coating composition comprising the drier and anti-skinning agent system may comprise from 0.00008 to 0.00475 % by weight, such as from 0.00008 to 0.0047 % by weight, such as from 0.00008 to 0.00465 % by weight, such as from 0.00008 to 0.0046 % by weight, such as from 0.00008 to 0.00455 % by weight of iron based on the total solid weight of the oxidatively drying binder. A coating composition comprising the drier and anti-skinning agent system may comprise from 0.000085 to 0.00475 % by weight, such as from 0.000085 to 0.0047 % by weight, such as from 0.000085 to 0.00465 % by weight, such as from 0.000085 to 0.0046 % by weight, such as from 0.000085 to 0.00455 % by weight of iron based on the total solid weight of the oxidatively drying binder. A coating composition comprising the drier and anti-skinning agent system may comprise from 0.00009 to 0.00475 % by weight, such as from 0.00009 to 0.0047 % by weight, such as from 0.00009 to 0.00465 % by weight, such as from 0.00009 to 0.0046 % by weight, such as from 0.00009 to 0.00455 % by weight of iron based on the total solid weight of the oxidatively drying binder.

A coating composition comprising the drier and anti-skinning agent system may comprise from 0.00025 to 0.0022 % by weight, such as from 0.000255 to 0.0021 % by weight, such as from 0.00026 to 0.0020 % by weight, such as from 0.000265 to 0.0019 % by weight, such as from 0.00027 to 0.0018 % by weight of iron based on the total solid weight of the oxidatively drying binder.

A composition comprising the drier and anti-skinning agent system may comprise up to 1 % by weight of iron based on the total solid weight of the oxidatively drying binder.

A coating composition comprising the drier and anti-skinning agent system may comprise from 0.0008 to 0.07 % by weight of manganese based on the total solid weight of the oxidatively drying binder.

A coating composition comprising the drier and anti-skinning agent system may comprise from 0.0008 to 0.07 % by weight, such as from 0.00085 to 0.065 % by weight, such as from 0.0009 to 0.06 % by weight, such as from 0.00095 to 0.055 % by weight, such as from 0.001 to 0.05 % by weight of manganese based on the total solid weight of the oxidatively drying binder.

A coating composition comprising the drier and anti-skinning agent system may comprise at least 0.0008 % by weight, such as at least 0.00085 % by weight, such as at least 0.0009 % by weight, such as at least 0.00095 % by weight, such as at least 0.001 % by weight of manganese based on the total solid weight of the oxidatively drying binder. A coating composition comprising the drier and anti-skinning agent system may comprise up to 0.07 % by weight, such as up to 0.065 % by weight, such as up to 0.06 % by weight, such as up to 0.055 % by weight, such as up to 0.05 % by weight of manganese based on the total solid weight of the oxidatively drying binder. A coating composition comprising the drier and anti-skinning agent system may comprise from 0.0008 to 0.07 % by weight, such as from 0.0008 to 0.065 % by weight, such as from 0.0008 to 0.06 % by weight, such as from 0.0008 to 0.055 % by weight, such as from 0.0008 to 0.05 % by weight of manganese based on the total solid weight of the oxidatively drying binder. A coating composition comprising the drier and anti-skinning agent system may comprise from 0.00085 to 0.07 % by weight, such as from 0.00085 to 0.065 % by weight, such as from 0.00085 to 0.06 % by weight, such as from 0.00085 to 0.055 % by weight, such as from 0.00085 to 0.05 % by weight of manganese based on the total solid weight of the oxidatively drying binder. A coating composition comprising the drier and anti-skinning agent system may comprise from 0.0009 to 0.07 % by weight, such as from 0.0009 to 0.065 % by weight, such as from 0.0009 to 0.06 % by weight, such as from 0.0009 to 0.055 % by weight, such as from 0.0009 to 0.05 % by weight of manganese based on the total solid weight of the oxidatively drying binder. A coating composition comprising the drier and anti-skinning agent system may comprise from 0.00095 to 0.07 % by weight, such as from 0.00095 to 0.065 % by weight, such as from 0.00095 to 0.06 % by weight, such as from 0.00095 to 0.055 % by weight, such as from 0.00095 to 0.05 % by weight of manganese based on the total solid weight of the oxidatively drying binder. A coating composition comprising the drier and anti-skinning agent system may comprise from 0.001 to 0.07 % by weight, such as from 0.001 to 0.065 % by weight, such as from 0.001 to 0.06 % by weight, such as from 0.001 to 0.055 % by weight, such as from 0.001 to 0.05 % by weight of manganese based on the total solid weight of the oxidatively drying binder.

A coating composition comprising the drier and anti-skinning agent system may comprise from 0.0016 to 0.024 % by weight, such as from 0.0017 to 0.023 % by weight, such as from 0.0018 to 0.022 % by weight, such as from 0.0019 to 0.021 % by weight, such as from 0.002 to 0.020 % by weight of manganese based on the total solid weight of the oxidatively drying binder.

A composition comprising the drier and anti-skinning agent system may comprise up to 1 % by weight of manganese based on the total weight of the solid oxidatively drying binder

### Iron ligand complex

The drier and anti-skinning agent system may comprise a primary drier agent comprising an iron ligand complex, which may comprise iron and a nitrogen donor ligand. The nitrogen donor ligand may comprise tridentate, tetradentate, pentadentate and hexadentate nitrogen donor ligands. For example, selected from the group comprising tetradentate, pentadentate, and hexadentate nitrogen donor ligands.

Primary drier agents comprising an iron ligand complex may comprise a nitrogen donor ligand according to formula (VI): 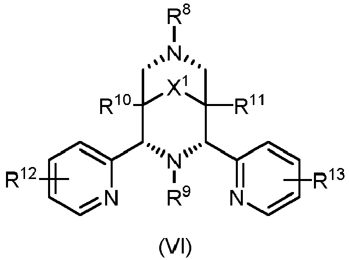
wherein R⁸ and R⁹ each independently represent an alkyl, an aryl, or a group containing heteroatoms (e.g. N, O, or S) capable of coordinating to the Fe metal;
wherein R¹⁰ and R¹¹ each independently represent hydrogen, an alkyl, an aryl, an alkylaryl, an ether, a heteroaryl, an alkylaminoalkyl, a heteroaryl alkyl, or an ester group;
wherein R¹² and R¹³ each independently represent hydrogen, a halogen, OH, an alkoxy, an amide, an amine, or an aminoalkyl; and
wherein X¹ represents a carbonyl or an alkylene.
R⁸ or R⁹ may independently be substituted with one or more substituents, each independently represent an alkyl, an aryl, and/or an aryl alkyl group.
R⁸ and R⁹ each may independently represent heteroaryl, heteroaryalkyl, alkylaminoalkyl; wherein heteroaryl may be selected from the group consisting of pyridyl, pyrazinyl, pyrazolyl, pyrrolyl, imidazolyl, benzimidazolyl, pyrimidinyl, triazolyl and thiazolyl, such as pyridin-2yl.
R¹⁰ and R¹¹ may each independently represent hydrogen, an alkyl or an ester group.

Primary drier agents comprising an iron ligand complex may comprise a nitrogen donor ligand according to formula (VI*) or formula (VI**):

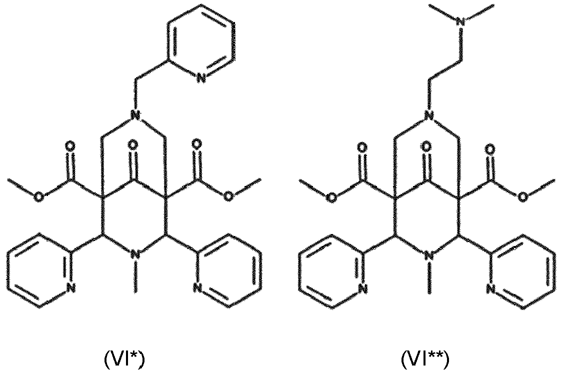

Primary drier agents comprising an iron ligand complex may comprise a nitrogen donor ligand, "(L)"; wherein the ligand is present in one or more forms selected from [Fe(L)CI], [Fe(L)CI]CI, [Fe(L)(H₂O)](PF₆)₂,[Fe(L)]Cl₂, [Fe(L)Cl]PF₆ or [Fe(L)(H₂O)](BF₄)₂.

Primary drier agents comprising an iron ligand complex may include compounds of formula (VI^{(*)}):

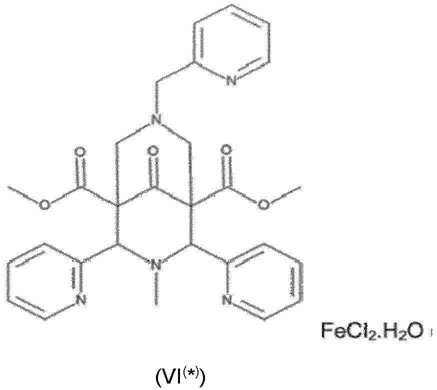

Primary drier agents comprising an iron ligand complex may include iron(1+),chloro[dimethyl-9,9-dihydroxy-3-methyl-2,4-di(2-pyridyl-kN )- 7 -[(2-pyridinyl-kN )methyl]-3, 7-diazabicyclo[3.3 .1 ]nonane-1, 5-dicarboxylate-kN3, kN7],chloride( 1-).

When the drier and anti-skinning agent system comprises an iron ligand complex, the drier and anti-skinning agent system may comprise a further drying agent comprising an organic salt of manganese and/or cerium.

When the drier and anti-skinning agent system of the invention comprises an iron ligand complex, the drier and anti-skinning agent system may comprise a further drying agent comprising the carboxylate salt of manganese and/or cerium.

Drying agents comprising the carboxylate salt of manganese and/or cerium can be prepared according to known procedures or can be obtained commercially. Examples of suitable commercially available drying agents based on carboxylate salts of manganese and/or cerium include Octa-Soligen^{®} Manganese 10 (Borchers) and Duroct Cerium 12% (Dura).

### Manganese ligand complex

The drier and anti-skinning agent system of the invention may comprise a primary drying agent comprising a manganese ligand complex.

The primary drying agent comprising a manganese ligand complex may comprise a ligand of formula (IX): 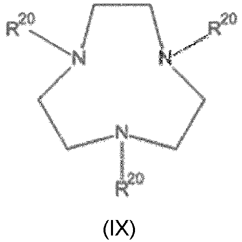 wherein each R²⁰ are identical or different from each other, independently represents an alkyl, a heteroaryl, an aryl, an arylalkyl, or an alkylaryl group.

The ligand of formula (IX) is also referred to as a TACN-Tx ligand.

The ligand of formula (IX) may be 1,4,7-trimethyl-1,4,7-tri-azacyclononane.

Primary driers comprising a manganese ligand complex may include complexes of formula (VII): 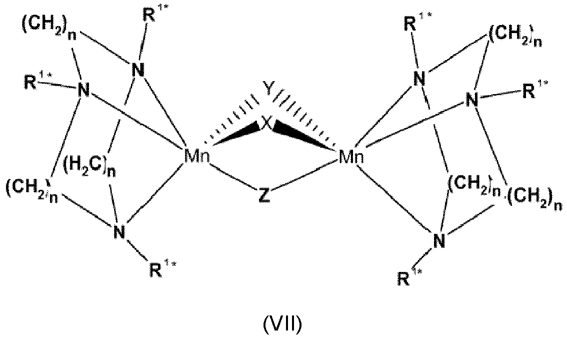
wherein each R^{1*} are identical or different from each other, and independently represent an alkyl, an alkenyl, or an alkynyl group;
wherein n is an integer from 1 to 5 (i.e. 1, 2, 3, 4, or 5), such as from 2 to 5, such as 2;
wherein X, Y, and Z are identical or different from each other, and represent an R²*COO⁻ group; and
wherein each R²* are identical or different from each other, and independently represent a hydrogen, an alkyl, an alkenyl, an alkynyl, a heteroalkyl or an arylalkyl group.
each R^{1*} may be identical or different from each other and represent an alkyl. Each R^{1*} may represent a methyl group.
each R²* may be identical or different from each other and represent an alkyl group.

Primary drier agents comprising a manganese ligand complex may include compounds of formula (VII⁽*⁾): 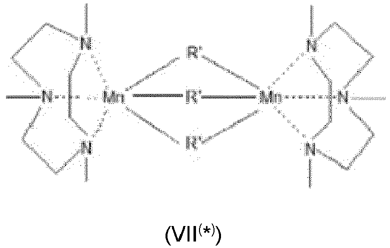 wherein R' each represent an R²*COO⁻ group. R' may represent CH₂ (CH₂)₃CH(C₂H₅)CO₂⁻ or CH₃CO₂⁻.

Primary drier agents comprising a manganese ligand complex may include tri-µ-(2-ethylhexanoato-O)-bis(N,N',N"trimethyl-1,4, 7-triazacyclononane-N ,N' ,N")di-manganese and µ-(acetato-O)-di-µ-(2-ethylhexanoatoO)-bis(N, N' ,N"-trimethyl-1,4,7-triazacyclononane-N,N' ,N")di-manganese.

When the drier and anti-skinning agent system comprises a manganese ligand complex, the drier and anti-skinning agent system may comprise a further drying agent comprising an organic salt of manganese and/or cerium.

When the drier and anti-skinning agent system comprises a manganese ligand complex, the drier and anti-skinning agent system may comprise a further drying agent comprising the carboxylate salt of manganese and/or cerium.

Drying agents comprising the carboxylate salt of manganese and/or cerium can be prepared according to known procedures or can be obtained commercially. Examples of suitable commercially available drying agents based on carboxylate salts of manganese and/or cerium include Octa-Soligen^{®} Manganese 10 (Borchers) and Duroct Cerium 12% (Dura).

### COORDINATION AND/OR AUXILIARY DRYING AGENT

The drier and anti-skinning agent system may further comprise a coordination drying agent and/or an auxiliary drying agent.

Coordination driers, also referred to synonymously as through driers, may enhance the homogeneous through drying of a coating film by interaction with the carboxyl and hydroxyl groups in a polymeric binder. This way, coordination driers can bridge two or more polymer chains. The carboxyl and hydroxyl groups may be initially present in the binder molecule or formed during the autoxidation process. Typical coordination driers may be selected from zirconium (Zr), strontium (Sr), aluminium (Al), bismuth (Bi), lanthanum (La), and/or neodymium (Nd) based metal driers.

Auxiliary driers are also referred to synonymously as secondary driers. These metal driers exist in a single oxidation state and are not catalytically active by themselves. However, secondary driers may affect the rate-of-dry by interacting with the primary drying agent. Typical secondary driers may be selected from calcium (Ca), barium (Ba), zinc (Zn), potassium (K) and/or lithium (Li) metal soaps.

### ANTI-SKINNING AGENT

The drier and anti-skinning agent system comprises an anti-skinning agent.

A coating composition comprising the drier and anti-skinning agent system may comprise 0.1 to 6% by weight of the anti-skinning agent, based on the total weight of a coating composition, such as 0.1 to 5% by weight of the anti-skinning agent, based on the total weight of a coating composition. A coating composition comprising the drier and anti-skinning agent system of the invention may comprise from 0.2 to 5% by weight of the anti-skinning agent, for example from 0.2 to 4.5 % by weight, for example from 0.5 to 3.5 % by weight, based on the total weight of a coating composition.

### Alkanolamine

The drier and anti-skinning agent system may further comprise an anti-skinning agent comprising an alkanolamine of formula (I): 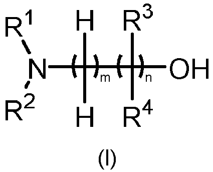
wherein each R¹ and R² independently represent hydrogen, an alkyl, alkenyl, an aryl, or an arylalkyl;
wherein each R³ and R⁴ independently represent hydrogen, or an alkyl;
wherein m represents 0 or 1; and
wherein n represents an integer from 1 to 10.

The alkanolamine of formula (I) may be selected from one or more of ethanolamine, 1-amino-2-propanol, 3-amino-1-propanol, 2-amino-1-butanol, 4-amino-1-butanol, 2-(methylamino)ethanol, 2-(ethylamino)ethanol, 2-(n-propylamino)ethanol, 2-(lsopropylamino)ethanol, 2-(n-butylamino)ethanol, 2-(tert-butylamino)ethanol, 2-(n-hexylethanol)amine, 2-(n-octylethanol)amine, 2-dimethylaminoethanol, 2-(diethylamino)ethanol, 2-(diisopropylamino)ethanol, 2-(dibutylamino)ethanol, 2-(dioctylamino)ethanol, 1-dimethylamino-2-propanol, 3-dimethylamino-1-propanol, 1-[bis[3-(dimethylamino)propyl]amino]-2-propanol, 2-dimethylamino-2-methylpropanol and 2-(methylamino)ethanol.

The alkanolamine of formula (I) may be selected from one or more of 2-dimethylaminoethanol, 1-[bis[3-(dimethylamino)propyl]amino]-2-propanol, and 2-dimethylamino-2-methylpropanol.

The alkanolamine of formula (I) may be selected from one or more of 1-dimethylamino-2-propanol and 3-(dimethylamino)-1-propanol.

The alkanolamine of formula (I) may comprise 2-dimethylaminoethanol.

A coating composition comprising the drier and anti-skinning agent system of the invention may comprise at least 0.1%, at least 0.2%, at least 0.3%, at least 0.5% or at least 0.8% by weight of the alkanolamine of formula (I), based on the total weight of a coating composition.

A coating composition comprising the drier and anti-skinning agent system of the invention may comprise up to 5%, up to 4%, up to 3% up to 2.5% or up to 2% by weight of the alkanolamine of formula (I), based on the total weight of a coating composition.

A coating composition comprising the drier and anti-skinning agent system of the invention may comprise 0.1 to 5 % by weight of the alkanolamine of formula (I), based on the total weight of a coating composition. A coating composition comprising the drier and anti-skinning agent system may comprise from 0.2 to 4% by weight of the alkanolamine of formula (I), such as from 0.3 to 2.5 % by weight, for example from 0.5 to 2 % by weight, based on the total weight of a coating composition.

### Mercaptan

The drier and anti-skinning agent system may further comprise an anti-skinning agent comprising a mercaptan of formula (II): 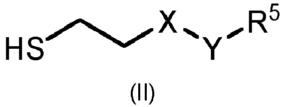
wherein R⁵ represents an alkyl or an arylalkyl;
wherein X represents a methylene or a carbonyl group; and
wherein Y represents methylene group or oxygen.
When X is a carbonyl group, Y may be oxygen.

The mercaptan of formula (II) may be selected from one or more of isooctyl 3-mercaptopropionate (IOMP), *n*-butyl 3-mercaptopropionate (BMP), methyl 3-mercaptopropionate, *n-*dodecyl mercaptan (DDM), *t*-dodecyl mercaptan, *n*-octyl mercaptan, *t*-octyl mercaptan, *sec*-octyl mercaptan, *n*-tetradecyl mercaptan, *n*-octadecyl mercaptan, *n*-hexyl mercaptan, *n*-amyl mercaptan, *n-*butyl mercaptan, and *t*-butyl mercaptan.

The drier and anti-skinning agent system of the invention may further comprise an anti-skinning agent comprising a mercaptan of formula (V): 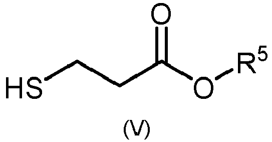 wherein R⁵ represents an alkyl or an arylalkyl.

The mercaptan of formula (II) or formula (V) may be selected from one or more of isooctyl 3-mercaptopropionate (IOMP), n-butyl 3-mercaptopropionate (BMP), and methyl 3-mercaptopropionate.

The mercaptan of formula (II) or formula (V) may comprise isooctyl 3-mercaptopropionate (IOMP).

A coating composition comprising the drier and anti-skinning agent system of the invention may comprise at least 0.05%, at least 0.1%, at least 0. 3%, at least 0.5%, or at least 0.8% by weight of the mercaptan of formula (II) or (V), based on the total weight of a coating composition.

A coating composition comprising the drier and anti-skinning agent system of the invention may comprise up to 5%, up to 4%, up to 3% up to 2.5% or up to 2% by weight of the mercaptan of formula (II) or (V), based on the total weight of a coating composition.

A coating composition comprising the drier and anti-skinning agent system may comprise from 0.05 to 5 % by weight of the mercaptan of formula (II) or (V), based on the total weight of a coating composition. A coating composition comprising the drier and anti-skinning agent system of the invention may comprise from 0.05 to 4 % by weight of the mercaptan of formula (II) or (V), such as from 0.3 to 3.5 % by weight, for example from 0.5 to 3 % by weight, based on the total weight of a coating composition.

### Diketone

The drier and anti-skinning agent system of the invention may further comprise an anti-skinning agent comprising a diketone of formula (III): 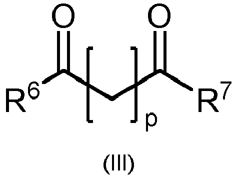
or a diketone of formula (IV): 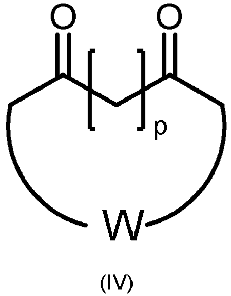
where p represents 0, 1 or 2;
wherein each of R⁶ and R⁷ independently represent an alkyl, an aryl, or an arylalkyl; and
wherein W represents an alkylene group, optionally substituted with one or more substituents selected from the group comprising an alkyl, -OH, and a halogen.

The drier and anti-skinning agent system of the invention may further comprise an anti-skinning agent comprising a diketone of formula (III) or formula (IV) (as shown herein above), wherein p represents 1 or 2.

The diketone of formula (III) and/or formula (IV) may be selected from one or more of 2,3-butanedione, 2,3-hexanedione, 2,4-pentanedione, 3,5-heptanedione, 2,4-dimethyl-3,5-heptanedione, 2,2,6,6-tetramethyl-3,5-heptanedione, 6-methyl-2,4-heptanedione, 5,5-dimethyl-2,4-heptanedione, 1-cyclobutylbutane-1,3-dione, 1,3-cyclohexanedione, 5-ethylcyclohexane-1,3-dione, and 4-cyclopentene-1,3-dione.

The diketone of formula (III) may be 2,4-pentanedione.

A coating composition comprising the drier and anti-skinning agent system of the invention may comprise from 0.1 to 5 % by weight of the diketone of formula (III) or formula (IV), based on the total weight of a coating composition. The drier and anti-skinning agent system of the invention may comprise from 0.2 to 5% by weight of the diketone of formula (III) or formula (IV), such as from 0.3 to 4.5 % by weight, for example from 0.5 to 4 % by weight, based on the total weight of a coating composition.

### OXIDATIVELY DRYING BINDER

There is also provided a coating composition comprising an oxidatively drying binder, and the drier and anti-skinning agent system of the invention.

The coating composition may be solvent-borne.

The coating composition may comprise from 0.1 to 10 % by weight of anti-skinning agent, based on the total weight of the coating composition. The coating composition may comprise from 3.5 to 9% by weight of the anti-skinning agent, for example from 4.5 to 8 % by weight, for example from 5 to 7.5 % by weight, based on the total weight of the coating composition.

The coating composition may comprise from 0.1 to 5 % by weight of anti-skinning agent, based on the total weight of the coating composition. The coating composition may comprise from 0.2 to 5% by weight of the anti-skinning agent, for example from 0.2 to 4.5 % by weight, for example from 0.5 to 3.5 % by weight, based on the total weight of the coating composition.

The oxidatively drying binder may be an autooxidizable alkyd binder. The autooxidizable alkyd binder may be any suitable auto-oxidisable alkyd binder. As used herein, the term "oxidatively drying binder", or "autooxidizable alkyd binder" are used interchangeably. As used herein "alkyd binder" or "alkyd resin" are used interchangeably. Suitable autoxidisable alkyd resins are in general the reaction product of the esterification of polyhydric alcohols with polybasic acids (or their anhydrides) and unsaturated fatty acids (or glycerol esters thereof).

The oxidatively drying binder dries and/or cures at least partially, suitably predominantly and suitably substantially entirely by auto-oxidisable methods. The oxidatively drying binder may comprise hybrid drying and/or curing mechanisms, wherein the binder is operable to dry and/or cure at least partially, suitably predominantly, by an auto-oxidisable mechanism and also operable to dry and/or cure partially by an alternative mechanism. For example, the oxidatively drying binder may also include the ability to dry and/or cure by UV cure technology, moisture cure technology, and/or temperature cure technology. The drying/curing capacity of the oxidatively drying binder may comprise at least 50%, such as at least 75% oxidatively drying mechanisms. Methods to determine the relative amounts of drying/curing in a given binder will be well know to a person skilled in the art. For example, the oxidative curing potential of a binder can be measured by iodine number analysis; silicon cure functionality can be measured by hydrolysis of the Si-alkoxy (using strong alkaline media, for example) to determine mol Si-alkoxy/gram resin.

Examples of suitable polycarboxylic acids include citraconic acid, citric acid, fumaric acid, mesaconic acid, maleic acid, phthalic acid, isophthalic acid, terephthalic acid, trimellitic acid, succinic acid, pyromellitic acid, their anhydrides or esters and combinations thereof. The polycarboxylic acids may comprise dicarboxylic acids.

Examples of suitable polyol compounds include ethylene glycol, 1,3-propane diol, 1,6-hexanediol. glycerol, trimethylol ethane, trimethylol propane, pentaerythritol, sorbitol, etherification products of these compounds, such as di-, tri- and tetrapentaerythritol, and combinations thereof.

The fatty acids may comprise polyunsaturated fatty acids, for example those derived from linseed oil, tung oil, tall oil, sunflower oil, soybean oil as well as from other drying or semi-drying oils.

The oils from which the fatty acids are derived may be drying or semi-drying oils. The oils may have iodine values of 100-130 mg/g, such as of 110-120 mg/g.

Unsaturated groups may also be present in the polyols and/or polycarboxylic acids or other building blocks used.

Alkyd resins are well-known in the art and need not be further described herein. The properties are primarily determined by the nature and the ratios of the alcohols and acids used and by the degree of condensation. Suitable alkyds include long oil, very long oil and medium oil alkyd resins e.g. derived from 45 to 85 wt% of fatty acids, such as derived from 45 to 70 wt% of fatty acids. As used herein, the term "long oil alkyd" refers to alkyd with an oil content of between 60 and 75 wt%, and a fatty acid content of 57 to 70 wt%. As used herein, the term "medium oil alkyd" refers to alkyd with an oil content of between 45 wt% and 60 wt%, and a fatty acid content of 42 to 57 wt%. As used herein, the term "very long oil alkyd" refers to alkyd with an oil content of between 75 and 85 wt%, and a fatty acid content of 70 to 80 wt%. The alkyd may comprise a medium oil alkyd. The alkyd may comprise a long oil alkyd. The alkyd may comprise a very long oil alkyd.

The alkyd may comprise the condensation product of soybean oil fatty acids, benzoic acid, pentaerythritol and phthalic anhydride having CAS number 6722-76-3.

To improve the performance of the alkyd resins, the composition of the long oil and medium oil alkyd may be modified. For example, polyurethane modified alkyds, silicone modified alkyds, styrene modified alkyds, acrylic modified alkyds (e.g. (meth)acrylic modified alkyds), vinylated alkyds, polyamide modified alkyds, and epoxy modified alkyds or mixtures thereof are also suitable alkyd resins.

The autoxidisable alkyd binder may comprise from a medium or long oil unmodified alkyd, a silicone modified alkyd, a polyurethane modified alkyd, acrylic modified alkyd, polyamide modified alkyd, an epoxy modified alkyd, or a combination thereof. The alkyd binder may comprise a long oil (unmodified) alkyd, a silicone modified alkyd, a polyurethane modified alkyd, acrylic modified alkyd, polyamide modified alkyd, an epoxy modified alkyd, or a combination thereof.

The amount of alkyd binder present may typically range from 10 to 98 % by weight, such as from 15 to 90 % by weight, such as from 20 to 80 % by weight, such as from 25 to 70 % by weight based on the total weight of the coating composition.

The coating composition may comprise at least 30% by weight of the alkyd binder based on the total weight of the coating composition, such as at least 40%, 50% or 60% by weight of the total weight of the coating composition. The alkyd binder may comprise between 40 and 60% by weight of the total weight of the coating composition, such as 50% by weight of the total weight of the coating composition.

The alkyd binder may have a solids content of between 5 and 100%, such as 50%, 55%, 60%, 65%, 70%, 75%, 80%, 85%, 90%, or 95%, whereby the solids content is defined as the non-volatile solids content or non-volatile matter or nvm. As used herein, the term "solids content" refers to the proportion of non-volatile material contained in a binder or formulation. As reported herein, the solids content of the alkyd binder was measured according to ISO3251 . All values for the solids content of the alkyd binder were measured in this way (unless specified otherwise).

### OTHER INGREDIENTS/ADDITIVES

The coating compositions may comprise further components, such as colorants. The colorant component of the coating composition may comprise an inorganic or organic, transparent or non-transparent pigment. Non-limiting examples of such pigments are titanium dioxide, iron oxides, mixed metal oxides, bismuth vanadate, chromium oxide green, ultramarine blue, carbon black, lampblack, monoazo and disazo pigments, anthraquinones, isoindolinones, isoindolines, quinophthalones, phthalocyanine blues and greens, dioxazines, quinacridones and diketo-pyrrolopyrroles; and extender pigments including silica, barium sulfate, magnesium silicate, calcium silicate, mica, micaceous iron oxide, calcium carbonate, zinc oxide, aluminium hydroxide and aluminium silicate, gypsum, feldspar, talcum, kaolin, and the like. The amount of pigment that can be used to form the coating composition is understood to vary, depending on the particular composition application, and can be zero when a clear composition is desired.

The coating compositions may include other additives, for example catalysts, other pigments and pigment pastes, dyes, fillers, stabilizers, thixotropic agents, anti-sagging agents, anti- oxidants, antifouling agents, anti-gelling agents, bactericides, fungicides, algaecides, insecticides, anti-settling agents, antifoaming agents, slip agents, flow and levelling agents, rheological modifiers, photoinitiators, UV-absorbers, synergists, HALS-radical scavengers, corrosion inhibitors, matting agents, waxes, mineral oils, flame retardants, anti-static agents, loss of dry inhibitors, optical brighteners, adhesion promoters, diluents, elastomers, plasticizers, air release agents, desiccants, anti-crater additives, reinforcing agents, dispersing aids, substrate wetting agents, odorants, corrosion-inhibitive pigments, additional hardeners and additional curable compounds, depending on the application. The coating compositions may include surface active agents, such as any of the well-known anionic, cationic or nonionic surfactants or dispersing agents. Examples of suitable additives that may be added to the coating composition may be found in Additives Guide, Paint & Coatings Magazine, June 2013, hereby incorporated by reference. If desired, other resinous materials can be utilized in conjunction with the aforementioned alkyd resins. The metal drier combinations and optionally colorants, pigments and extenders and optionally other additives may be formulated into the coating compositions by mixing and, if appropriate, dispersing and grinding with the liquid binder.

The coating composition may be formulated as a one package coating composition, also referred herein as a one-component (1 K) coating composition.

A "1 K" or "one package" composition will be understood as referring to a composition wherein all of the components are maintained in the same container after manufacture, during storage, etc. A "two package" or "2K" composition will be understood as referring to a composition wherein two components are maintained separately until just prior to application. A "multi package" or "multicomponent" composition will be understood as referring to a composition wherein various components are maintained separately until just prior to application.

### USE

The coating composition according to the invention can be used and/or formulated as varnish, lacquer, paint, stain, enamel, printing ink or floor covering and similar compositions which contain auto-oxidisable alkyd resins.

Thus, there is also provided the use of the coating compositions described herein in a varnish, lacquer, paint, stain, enamel, printing ink or floor covering.

There is also provided the use of the coating compositions described herein as a paint, such as an architectural paint.

### COATED SUBSTRATE

The present invention also relates to a substrate having applied to at least a portion thereof a coating composition of the present invention. The present invention also relates to a substrate having a coating on at least a portion thereof, the coating being derivable from a coating composition of the present invention.

The coating compositions can be applied to various substrates including wood, paper, foam, and synthetic materials (such as plastics including elastomeric substrates), leather, textiles, glass, ceramic, metals (such as iron, steel and aluminium), concrete, cement, brick, and the like.

As a result, there is also provided a substrate partially or fully coated with a coating composition of the present invention. The substrates may be pre-treated before application of the coating composition. The substrates may be post-treated after application of the coating composition, for example with any other compositions.

Any known method can be used to apply the coating compositions to a substrate. Non-limiting examples of such application methods are spreading (e.g. with paint pad or doctor blade, or by brushing or rolling), spraying (e.g. air-fed spray, airless spray, hot spray, and electrostatic spray), flow coating (e.g. dipping, curtain coating, roller coating, and reverse roller coating), and electrodeposition (see generally, R. Lambourne, Editor, Paint and Surface Coating: Theory and Practice, Eilis Horwood, 1987, page 39 et seq.).

The coating compositions can be applied and fully cured at ambient temperature conditions in the range of from -10°C to 50°C. Curing of the coating compositions typically can proceed very rapidly, and in general can take place at a temperature within the range of from -10°C to +50°C, such as from 0°C to 40 °C, such as from 3 to 25°C. However, the coating compositions may be cured by additional heating.

The coating compositions may be used as a single coating, a top coating, a base coating in a two-layered system, or a layer of a multi-layered system including a clear top coating composition, colorant layer and base coating composition, or as a primer layer. A typical opaque system may comprise: 1 or 2 layers primer and 1 or 2 layers of topcoat (a total of 3 layers). Alternative opaque systems may comprise: 1 primer layer, 1 layer of mid coat and 1 layer topcoat. Examples of transparent systems may comprise 1 layer of impregnant and 3 layers of topcoats or 3 layers of topcoat for maintenance work.

A coating derivable from a coating composition refers to a cured coating (film), derivable from the uncured (wet) coating composition.

All of the features contained herein may be combined with any of the above aspects and in any combination.

For a better understanding of the invention, and to show how embodiments of the same may be carried into effect, reference will now be made, by way of example, to the following experimental data.

### Examples

Several examples and comparative examples are described hereunder illustrating the effect of the compositions according to the present disclosure on the drying properties.

Unless otherwise indicated, all parts and all percentages in the following examples, as well as throughout the specification, are parts by weight or percentages by weight respectively. The following test methods were used to evaluate the films and coatings prepared according to the disclosure.

The skin-free time tests were performed in closed jars, filled to 40% of the volume and having an air packed head space of 60%. The jars containing the paint products were stored at 23 °C and examined at specified time intervals for signs of skin formation. A skin on the surface of the composition was considered to have formed when it had sufficient tensile strength to support a gentle indentation by a spatula. Anti-skinning performance was defined as the number of days at which skin formation was first observed.

The drying stages of the paint formulations were assessed using a BK-drying recorder (Sheen Instruments Ltd). A wet paint layer is cast on a glass strip 30.5 x 2.5 cm by using a sheen cube with a gap size of 150 µm. A vertical blunt needle is positioned into the freshly applied film loaded by 5 g of brass and then dragged through the drying paint at a speed of 24.4 mm/h in a direction parallel to the length of the coat. A freshly applied alkyd coating is a viscous liquid and the needle penetrates through the coating onto the glass plate and creates a score. As the physical drying and autoxidation of the alkyd coating progresses the viscosity of the drying film rises and the resistance to penetration by the needle increases. During the drying process, the needle creates a typical pattern and the various drying stages can be read off from the scribed pattern.

The drying times were determined in terms of four stages, defined as follows:

Run back: the film flows back together when the stylus moves through it and no groove is formed. This phase is characterised by the evaporation of the solvent from the paint.

Continuous track: the film is starting to set up. It does not flow back together after the stylus moves through it bringing about a groove in the film. In this stage, the viscosity of the pain film has substantially increased. This phase ends when the point of "start of gel tear" is reached.

Gel tear: The stylus rips the surface skin of the film. The film is starting to surface dry but is not through dry.

Surface Trace: The stylus leaves a mark on the surface of the film. The phase is characterised by the film starting to through dry. At the end of this phase, the resistance becomes total and no further penetration occurs. The alkyd film has reached the status of "through dry".

An acceptable drying of a composition is demonstrated by a composition that dries within 3 hours or less from application to a substrate. A less acceptable drying performance of a composition is demonstrated by a composition that requires a drying time of more than 3 hours, from application to a substrate.

An acceptable anti-skinning performance of a composition is demonstrated by a composition that forms a skin after 20 days or more, for example. A generally less acceptable anti-skinning performance of a composition is demonstrated by a composition that forms a skin in under 20 days.

The following compounds were used:
Nuodex^{®} Drycoat: complex of manganese bis(2-ethylhexanoate) and N,N',N"-trimethyl-1,4,7-triazacyclononane (cas: 1381939-25-8, EC: 937-913-7) equivalent to 1% of Mn, commercially available from Venator.
Borchi^{®} OXY-Coat: contains 1 wt% Fe-complex (bispidon ligand), equivalent to 0,09 wt% Fe, dissolved in propylene glycol, commercially available from Borchers, comprising the complex Iron (1+),chloro[dimethyl-9,9-dihydroxy-3-methyl-2,4-di-(2-pyridyl-kN)-7-[(2-pyridinyl-kN)methyl]-3,7-diazabicyclo[3.3.1]nonane-1,5-dicarboxylate-kN3,kN7]-,chloride(1-) (CAS nr. 478945-46-9).
Octa-Soligen^{®} Manganese 10: a metal drier comprising manganese bis(2-ethylhexanoate) equivalent to 10 wt% of Mn, commercially available from Borchers.
Duroct Cerium 12%: a metal drier comprising cerium tris(2-ethylhexanoate) equivalent to 12 wt% of Ce, commercially available from Dura.
2-(Dimethylamino)-ethanol (CAS nr. 108-01-0), 2-(diethylamino)-ethanol (CAS nr. 100-37-8), 2-(dibutylamino)ethanol (CAS nr. 102-81-8), 1-(dimethylamino)-2-propanol (CAS nr. 108-16-7), 3-dimethylamino-1-propanol (CAS nr. 3179-63-3), 1-[bis[3-(dimethylamino)propyl]amino]-2-propanol (CAS nr. 67151-63-7), 2-dimethylamino-2-methylpropanol solution (75 wt% aqueous solution of 2-dimethylamino-2-methylpropanol, CAS nr. 7005-47-2), N-methyldiethanolamine (CAS nr. 109-83-1), 2-amino-2-methyl-1-propanol solution (90 wt% aqueous solution of 2-amino-2-methyl-1-propanol, CAS nr. 124-68-5), ethanolamine (CAS nr. 141-43-5), isooctyl 3-mercaptopropionate (CAS nr. 30374-01-7) and 2,4-pentanedione (CAS nr. 123-54-6), didodecyl 3,3'-thiodipropionate (CAS nr. 123-28-4), pentaerythritol tetrakis(3-mercaptopropionate) (CAS nr. 7575-23-7) are commercially available from Sigma-Aldrich.
Ethyl carbazate (CAS nr. 4114-31-2), commercially available from Sigma-Aldrich
Ascinin^{®} Anti Skin 1240: Anti-skinning agent for oxidatively curing coating compositions, containing 1-5% by weight of N,N-diethylhydroxylamine (CAS nr. 3710-84-7) and 45-55% by weight of 2-dimethylaminoethanol (CAS nr. 108-01-0), commercially available from Borchers.
Borchers^{®} VP 0132 is a primary drier based on an organically modified vanadium compound (having a vanadium content of 5% by weight), suitable for solvent borne oxidatively drying coating compositions and commercially available from Borchers.
EGEDry^{®} IronOct is an iron-based drier composed of a solution of a metallic soap of 2-ethyl hexanoic acid in aliphatic solvents (having an iron content of 10% by weight), commercially available from Ege-Kimya.

Base paint 1 without the drier and anti-skinning agent system of the invention was prepared by mixing the constituents listed in Table 1.

**Table 1**

| BASE PAINT 1 | |
|---|---|
| CONSTITUENTS | PARTS BY WEIGHT |
| LONG OIL ALKYD (85% nvm) | 48.8 |
| POLYURETHANE MODIFIED ALKYD (60% nvm) | 14.9 |
| PIGMENT DISPERSANT | 0.5 |
| CALCIUM (5%) DRIER | 0.5 |
| TITANIUM DIOXIDE | 25.4 |
| HIGH BOILING POINT ALIPHATIC SOLVENT | 8.8 |
| DEFOAMER | 0.3 |
| BORCHI OXY-COAT | 0.8 |
| TOTAL | 1000 |

### Example A

Coating compositions were prepared by mixing together the constituents listed in Table 1 with a drier and anti-skinning agent system according to the invention or with a comparative drier and anti- skinning agent system, as shown in Table 2.

**Table 2**

| **Composition (parts by weight)** | **Comp.²⁾ Example 1** | **Comp. Example 2** | **Comp. Example 3** | **Example 1** | **Example 2** | **Example 3** | **Example 4** | **Example 5** |
|---|---|---|---|---|---|---|---|---|
| **BASE PAINT 1** | 95.5 | 95.5 | 95.5 | 95.5 | 95.5 | 95.5 | 95.5 | 95.5 |
| Methylethylketoxime | 1.0 | 1.5 | | | | | | |
| Ascinin^{®} Anti Skin 1240 | | | 1.5 | | | | | |
| 2-dimethylaminoethanol | | | | 1.0 | | | | 1.0 |
| 1-dimethylamino-2-propanol | | | | | 2.0 | | | |
| 3-(dimethylamino)-1-propanol | | | | | | 2.0 | | |
| 2-(dimethylamino)-2-methyl-1-propanol ¹⁾ | | | | | | | 2.0 | |
| isooctyl 3-mercaptopropionate | | | | 1.0 | 1.0 | 1.0 | 1.0 | 1.0 |
| manganese (10%) drier | | | | 0.3 | 0.3 | 0.3 | 0.3 | |
| skin-free period (in days) | **2** | **7** | **1** | **136** | **> 121** | **> 121** | **> 136** | **>97** |
| BK drying at 23 °C (hours:minutes) | **1:45** | **1:45** | **----** | **2:45** | **2:15** | **3:00** | **2:45** | **01:00** |

| | | | | | | | | |
|---|---|---|---|---|---|---|---|---|
| 1) 80% 2-(dimethylamino)-2-methyl-1-propanol solution in H₂O 2) Comp. = Comparative | | | | | | | | |

The results of Table 2 demonstrate that coating compositions comprising a drier and anti-skinning agent system according to the invention provide better anti-skinning activity, thereby improving the storage stability of the composition, without compromising the drying performance of the coating composition. Examples 1-4 of Table 2 comprise an iron ligand complex based primary drier, manganese octoate as the further drying agent, and an anti-skinning agent comprising isooctyl 3-mercaptiopropionate and: 2-dimethylaminoethanol (Example 1), 1-dimethylamino-2-propanol (Example 2), 3-(dimethylamino)-1-propanol (Example 3) and 2-(dimethylamino)-2-methyl-1-propanol (Example 4). Each of those compositions demonstrated superior storage stability and drying time compared to the comparative examples (Comparative Examples 1 to 3), which did not comprise a drier and anti-skinning agent system according to the invention. In particular, coating compositions comprising an iron ligand complex based primary drier, a manganese based further drying agent, and an anti-skinning agent comprising an alkanolamine of formula (I) and a mercaptan of formulas (II) and (V) provide compositions with improved storage stability and shorter drying times.

The results of Table 2 further demonstrate that methyl ethyl ketoxime, even in high amounts such as 1.5 wt% is not effective in preventing early skin formation of a coating composition comprising an iron ligand complex based primary drier such as Borchi^{®} OXY-Coat (Comparative Examples 1 and 2).

### Example B

Coating compositions were prepared by mixing together the constituents listed in Table 1 (Base Paint 1) with a drier and anti-skinning agent system according to the invention or with a comparative drier and anti-skinning agent system, as shown in Table 3.

**Table 3**

| **Composition (parts by weight)** | **Comparative Example 4** | **Comparative Example 5** | **Comparative Example 6** | **Example 6** |
|---|---|---|---|---|
| **BASE PAINT 1** | **95.5** | **95.5** | **95.5** | **95.5** |
| 2-dimethylaminoethanol | 1.0 | 10 | 10 | 10 |
| didodecyl 3,3'-thiodipropionate ¹⁾ | | 5.1 | | |
| pentaerythritol tetrakis(3-mercaptopropionate) | | | 1.0 | |
| isooctyl 3-mercaptopropionate | | | | 10 |
| manganese (10%) drier | 0.3 | 0.3 | 0.3 | 0.3 |
| skin-free period (in days) | **28** | **1** | **4** | **132** |
| BK drying at 23 °C (hours:minutes) | **4:30** | **4:00** | **2:30** | **2:30** |

| | | | | |
|---|---|---|---|---|
| 1) 19% solution of didodecyl 3,3'-thiodipropionate in Shellsol D40 | | | | |

The results of Table 3 demonstrate that coating compositions comprising a drier and anti-skinning agent system according to the invention provide better anti-skinning activity, thereby improving the storage stability of the composition, without compromising the drying performance of the coating composition. Example 6 of Table 3 comprises an iron ligand complex based primary drier, manganese octoate as the further drying agent, and an anti-skinning agent comprising isooctyl 3-mercaptiopropionate and 2-dimethylaminoethanol. The composition of Example 6 in Table 3 demonstrated superior storage stability as well as a good drying time compared to Comparative Examples 4-6, which did not comprise a drier and anti-skinning agent system according to the invention.

In particular, coating compositions comprising an iron ligand complex based primary drier, manganese octoate as the further drying agent, and an anti-skinning agent comprising an alkanolamine of formula (I) and a mercaptan of formulas (II) or (V) provide compositions with improved storage stability and shorter drying times.

Surprisingly, the chain transfer agent isooctyl-3-mercaptopropionate has a positive effect on the contradictory properties of the coating composition: drying time and an anti-skinning efficacy. In contrast, thiol ethers such as didodecyl 3,3'-thiodipropionate (Comparative Example 5) and polythiols having two or more thiol groups such as pentaerythritol tetrakis(3-mercaptopropionate) (Comparative Example 6) are not effective as anti-skinning agents in combination with 2-dimethylaminoethanol and manganese octoate.

Comparative Example 4 demonstrates that coating compositions with drier systems comprising an iron ligand complex based primary drier and an anti-skinning agent comprising only an alkanolamine yield compositions with good storage stability but long drying times.

### Example C

Coating compositions were prepared by mixing together the constituents listed in Table 1 (Base Paint 1) with a drier and anti-skinning agent system according to the invention or with a comparative drier and anti-skinning agent system, as shown in Table 4.

**Table 4**

| **Composition (parts by weight)** | **Comparative Example 7** | **Example 7** | **Example 8** | **Example 9** |
|---|---|---|---|---|
| **BASE PAINT 1** | 95.5 | 95.5 | 95.5 | 95.5 |
| 2-dimethylaminoethanol | 1.0 | 10 | 10 | 10 |
| Ethyl carbazate ¹⁾ | 1.0 | | | |
| isooctyl 3-mercaptopropionate | | 1.0 | | 1.0 |
| 2,4-pentanedione | | | 0.5 | 0.3 |
| cerium (12%) drier | 0.3 | 0.3 | 0.3 | 0.3 |
| skin-free period (in days) | **12** | **47** | **62** | **>91** |
| BK drying at 23 °C (hours:minutes) | **1:30** | **2:00** | **1:30** | **2:30** |

| | | | | |
|---|---|---|---|---|
| 1) 10% Ethyl carbazate solution in Dowanol PM | | | | |

The results of Table 4 demonstrate that coating compositions comprising a drier and anti-skinning agent system according to the invention provide better anti-skinning activity, thereby improving the storage stability of the composition, without compromising the drying performance of the coating composition. Example 7 of Table 4 comprises an iron ligand complex based primary drier, cerium ethylhexanoate as the further drying agent, and an anti-skinning agent comprising 2-dimethylaminoethanol and isooctyl 3-mercaptiopropionate. Example 8 of Table 4 comprises an iron ligand complex based primary drier, cerium ethylhexanoate as the further drying agent, and an anti-skinning agent comprising 2-dimethylaminoethanol and 2,4-pentanedione. The compositions of Examples 7 to 9 in Table 4 demonstrated superior storage stability as well as a good drying time compared to Comparative Example 7, which did not comprise a drier and anti-skinning agent system according to the invention.

The results of Table 4 show that isooctyl 3-mercaptopropionate and 2,4-pentanedione in and combination with of 2-dimethylaminoethanol, cerium ethylhexanoate and an iron ligand complex based primary drier demonstrate extended skin-free period along with fast dry times. In particular, that coating compositions comprising an iron ligand complex based primary drier, cerium ethylhexanoate as the further drying agent, and an anti-skinning agent comprising an alkanolamine of formula (I) and a mercaptan of formulas (II) and (V) or an anti-skinning agent comprising an alkanolamine of formula (I) and a diketone of formula (III) provide compositions with improved storage stability and shorter drying times.

### Example D

Coating compositions were prepared by mixing together the constituents listed in Table 1 (Base Paint 1) with a drier and anti-skinning agent system according to the invention as shown in Table 5.

**Table 5**

| **Composition (parts by weight)** | **Example 1 (reprinted from above)** | **Example 5 (reprinted from above)** | **Example 10** | **Example 11** | **Example 12** |
|---|---|---|---|---|---|
| **BASE PAINT 1** | 95.5 | 95.5 | 95.5 | 95.5 | 95.5 |
| 2-dimethylaminoethanol | 1.0 | 10 | 1.0 | 2.0 | 2.0 |
| isooctyl 3-mercaptopropionate | 1.0 | 1.0 | 10 | 1.5 | 20 |
| Nuodex Drycoat | | | | 0.3 | 0.1 |
| manganese (10%) drier | 0.3 | | 0.1 | | |
| skin-free period (in days) | **136** | **97** | **>62** | **>62** | **>62** |
| BK drying at 23 °C (hours:minutes) | **2:45** | **1:00** | **1:30** | **1:00** | **1:15** |

Example 1 and Example 5 are reprinted in Table 5 to aid direct comparison, but for the avoidance of doubt, they are the same as those detailed in Table 2, above. Example 10 demonstrates that compositions of the invention comprising a drier and anti-skinning agent system comprising a primary drier based on an iron ligand complex, an anti-skinning agent comprising dimethylaminoethanol and isooctyl 3-mercaptopropionate, and a manganese octoate further drier provide excellent anti-skinning performance and excellent drying performance.

Examples 11 and 12 demonstrate that compositions of the invention comprising a drier and anti-skinning agent system comprising both a primary drier based on an iron ligand complex and a primary drier based on a manganese ligand complex, and an anti-skinning agent comprising dimethylaminoethanol and isooctyl 3-mercaptopropionate provide excellent anti-skinning performance and excellent drying performance.

### Example E

To study the catalytic suppressing activity of the inventive combination of anti-skinning agents on primary metal driers, a base paint absent any anti-skinning agents and metal driers was prepared by grinding in a bead mill and mixing the constituents together as listed in Table 6.

**Table 6**

| BASE PAINT 2 | |
|---|---|
| Composition | PARTS BY WEIGHT |
| LONG OIL ALKYD (85% nvm) | 49.2 |
| POLYURETHANE MODIFIED ALKYD (60% nvm) | 150 |
| PIGMENT DISPERSANT | 0.5 |
| CALCIUM (5%) DRIER | 0.5 |
| TITANIUM DIOXIDE | 25.6 |
| HIGH BOILING POINT ALIPHATIC SOLVENT | 8.9 |
| DEFOAMER | 0.3 |
| TOTAL | 1000 |

To portions of the alkyd Base Paint 2, drier and anti-skinning agent systems of the present invention or comparative drier and anti-skinning agent systems were added. The results are shown in Table 7.

**Table 7**

| **Composition (parts by weight)** | **Comparative Example 8** | **Comparative Example 9** | **Comparative Example 10** | **Comparative Example 11** | **Example 13** | **Example 14** | **Example 15** | **Example 16** | **Example 17** | **Example 18** |
|---|---|---|---|---|---|---|---|---|---|---|
| **BASE PAINT 2** | 947 | 94.7 | 94.7 | 94.7 | 94.7 | 94.7 | 94.7 | 95.5 | 94.7 | 94.7 |
| 2-dimethylaminoethanol | 10 | 10 | 10 | 10 | 10 | 10 | | | | |
| isooctyl 3-mercaptopropionate | 1.0 | 1.0 | 1.0 | 1.0 | 1.0 | 1.0 | 2.0 | 2.0 | 3.0 | 3.0 |
| manganese (10%) drier | 0.5 | | | | | | | | | 0.05 |
| iron (10%) drier | | 0.5 | | | | | | | | |
| vanadium (5%) driers | | | 0.5 | | | | | | | |
| cerium (12%) drier | | | | 0.5 | | | | | | |
| Borchi^{®} OXY-Coat | | | | | | | | 0.8 | 0.8 | 0.8 |
| Nuodex Drycoat | | | | | 0.5 | 0.35 | 0.35 | | 0.05 | |
| skin-free period (in days) | **> 98** | **14** | **22** | **> 98** | > **98** | **>52** | **>52** | **>52** | **51** | **>62** |
| BK drying at 23 °C (hours:minutes) | **6:00** | **8:00** | **6:00** | **> 24:00** | **1:00** | **1:45** | **2:00** | **3:00** | **2:30** | **2:45** |

The results of Table 7 demonstrate that coating compositions comprising a drier and anti-skinning agent system according to the invention provide better anti-skinning activity, thereby improving the storage stability of the composition, without compromising the drying performance of the coating composition. Example 13 of Table 7 and Example 5 of Table 2 comprise an iron or manganese ligand complex based primary drier, and an anti-skinning agent comprising isooctyl 3-mercaptiopropionate and 2-dimethylaminoethanol. The compositions of Example 13 in Table 7 and Example 5 of Table 2 demonstrated superior storage stability and drying time compared to Comparative Examples 8-11, which did not comprise a drier and anti-skinning agent system according to the invention.

In particular, coating compositions comprising an iron or manganese ligand complex based primary drier, and an anti-skinning agent comprising an alkanolamine of formula (I) and a mercaptan of formulas (II) or (V) provide compositions with improved storage stability and shorter drying times.

The anti-skinning and drying characteristics of Examples 13 and 14 demonstrate that a combination of 2-dimethylethanolamine and isooctyl 3-mercaptopropionate is successful in oxidatively drying binder (alkyd) based coating formulations containing manganese ligand complexes, such as Nuodex Drycoat, as the sole primary drier.

Comparative Examples 8-11 contain drier systems that do not comprise an iron or manganese ligand complex based primary drier. The results of Comparative Examples 8-11 of Table 7 demonstrate that anti-skinning compositions comprising 2-dimethylethanolamine and isooctyl 3-mercaptopropionate are not effective in oxidatively drying binder (alkyd) based coating compositions in the absence of iron and manganese ligand complexes as the primary drier. Primary driers such as organic salts of manganese, iron, vanadium and cerium do not enhance the anti-skinning and/or drying time of the compositions successfully compared to iron or manganese ligand complex based primary driers (Comparative Examples 8-11).

Example 17 demonstrates that oxidatively drying binder based compositions of the invention comprising a drier and anti-skinning agent system comprising a primary drier based on an iron ligand complex and a primary drier based on a manganese ligand complex and an anti-skinning agent comprising isooctyl 3-mercaptopropionate provide excellent anti-skinning performance and excellent drying performance.

Example 18 demonstrates that oxidatively drying binder based compositions of the invention comprising a drier and anti-skinning agent system comprising a primary drier based on an iron ligand complex and a manganese based further drying agent and an anti-skinning agent comprising isooctyl 3-mercaptopropionate provide excellent anti-skinning performance and excellent drying performance.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

Whereas particular examples of this invention have been described above for purposes of illustration, it will be evident to those skilled in the art that numerous variations of the details of the present invention may be made without departing from the invention as defined in the appended claims.

## Claims

1. A drier and anti-skinning agent system for an oxidatively drying binder-based coating composition comprising:
a. a drying agent comprising an iron ligand complex and/or a manganese ligand complex; and
b. an anti-skinning agent comprising
i. an alkanolamine of formula (I) 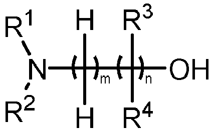
wherein each R¹ and R² independently represent hydrogen, an alkyl, alkenyl, an aryl, or an arylalkyl;
wherein each R³ and R⁴ independently represent hydrogen, or an alkyl;
wherein m represents 0 or 1; and
wherein n represents an integer from 1 to 10; and
ii. (A) and/or (B)
wherein (A) is a mercaptan of formula (II) 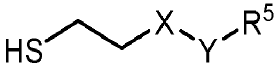
wherein R⁵ represents an alkyl or an arylalkyl;
wherein X represents a methylene or a carbonyl group; and
wherein Y represents methylene group or oxygen; and
wherein (B) is a diketone of formula (III) 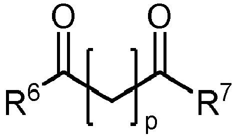
or a diketone of formula (IV) 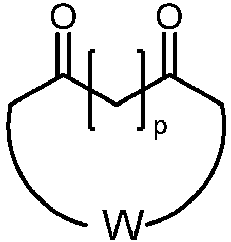
where p represents 0, 1 or 2; and
wherein each of R⁶ and R⁷ independently represent an alkyl, an aryl, or an arylalkyl; and wherein W represents an alkylene group, optionally substituted with one or more substituents selected from the group comprising an alkyl, -OH, and a halogen.

2. The drier and anti-skinning agent system according to claim 1, wherein the drier and anti-skinning agent system comprises a further drying agent comprising an organic salt of manganese and/or cerium.

3. The drier and anti-skinning agent system according to claim 1 or claim 2, wherein (A) is a mercaptan of formula (V): 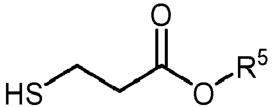 wherein R⁵ represents an alkyl or an arylalkyl.

4. The drier and anti-skinning agent system according to any one of the preceding claims, wherein the drier and anti-skinning agent system further comprises a secondary drying agent comprising an organic salt of zirconium and/or calcium.

5. The drier and anti-skinning agent system of any one of the preceding claims, wherein the alkanolamine of formula (I) is selected from one or more of ethanolamine, 1-amino-2-propanol, 3-amino-1-propanol, 2-amino-1-butanol, 4-amino-1-butanol, 2-(methylamino)ethanol, 2-(ethylamino)ethanol, 2-(n-propylamino)ethanol, 2-(Isopropylamino)ethanol, 2-(n-butylamino)ethanol, 2-(tert-butylamino)ethanol, 2-(n-hexylethanol)amine, 2-(n-octylethanol)amine, 2-dimethylaminoethanol, 2-(diethylamino)ethanol, 2-(diisopropylamino)ethanol, 2-(dibutylamino)ethanol, 2-(dioctylamino)ethanol, 1-dimethylamino-2-propanol, 3-dimethylamino-1-propanol, 1-[bis[3-(dimethylamino)propyl]amino]-2-propanol, 2-dimethylamino-2-methylpropanol and 2-(methylamino)ethanol.

6. The drier and anti-skinning agent system according to any one of claims 1, 2, 4, 5, 7 or 8, wherein the mercaptan of formula (II) is selected from one or more of isooctyl 3-mercaptopropionate (IOMP), *n*-butyl 3-mercaptopropionate (BMP), methyl 3-mercaptopropionate, *n*-dodecyl mercaptan (DDM), *t*-dodecyl mercaptan, *n*-octyl mercaptan, *t-*octyl mercaptan, *sec*-octyl mercaptan, *n*-tetradecyl mercaptan, *n*-octadecyl mercaptan, *n*-hexyl mercaptan, *n*-amyl mercaptan, *n*-butyl mercaptan, and *t*-butyl mercaptan.

7. The drier and anti-skinning agent system according to any of claims 1, 2, 4, or 6 to 8, wherein the diketone of formula (III) or formula (IV) is selected from one or more of 2,3-butanedione, 2,3-hexanedione, 2,4-pentanedione, 3,5-heptanedione, 2,4-dimethyl-3,5-heptanedione, 2,2,6,6-tetramethyl-3,5-heptanedione, 6-methyl-2,4-heptanedione, 5,5-dimethyl-2,4-heptanedione, 1-cyclobutylbutane-1,3-dione, 1,3-cyclohexanedione, 5-ethylcyclohexane-1,3-dione, and 4-cyclopentene-1,3-dione.

8. A coating composition comprising an oxidatively drying binder and the drier and anti-skinning agent system according to any one of claims 1-11.

9. The coating composition according to claim 8, which further comprises an oxidatively drying binder which may comprise an alkyd-based resin selected from one or of a medium or long oil unmodified alkyd, a silicone modified alkyd, a polyurethane modified alkyd, acrylic modified alkyd, polyamide modified alkyd, or a combination thereof.

10. The coating composition according to either of claim 8 or claim 9, wherein the drier and anti-skinning agent system comprises 0.1 to 3 % by weight of the alkanolamine of formula (I), based on the total solid weight of a coating composition.

11. A substrate having a coating on at least a portion thereof, the coating being derived from a coating composition according to any one of claims 8 to 10.

12. A method of preventing or mitigating skin formation in an oxidatively drying binder-based coating composition, the method comprising using a drier and anti-skinning agent system comprising:
a. drying agent comprising an iron ligand complex and/or a manganese ligand complex;
b. an anti-skinning agent comprising
i. an alkanolamine of formula (I) 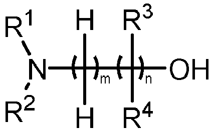
wherein each R¹ and R² independently represent hydrogen, an alkyl, alkenyl, an aryl, or an arylalkyl;
wherein each R³ and R⁴ independently represent hydrogen, or an alkyl;
wherein m represents 0 or 1; and
wherein n represents an integer from 1 to 10; and
ii. (A) and/or (B)
wherein (A) is a mercaptan of formula (II) 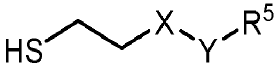
wherein R⁵ represents an alkyl or an arylalkyl;
wherein X represents a methylene or a carbonyl group; and
wherein Y represents methylene group or oxygen; and
wherein (B) is a diketone of formula (III) 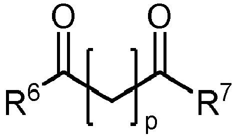
or a diketone of formula (IV) 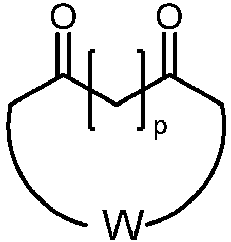
where p represents 0, 1 or 2; and
wherein each of R⁶ and R⁷ independently represent an alkyl, an aryl, or an arylalkyl; and wherein W represents an alkylene group, optionally substituted with one or more substituents selected from the group comprising an alkyl, -OH, and a halogen.

13. Use of a drier and anti-skinning agent system comprising:
a. a drying agent comprising an iron ligand complex and/or a manganese ligand complex;
b. an anti-skinning agent comprising
i. an alkanolamine of formula (I) 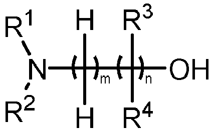
wherein each R¹ and R² independently represent hydrogen, an alkyl, alkenyl, an aryl, or an arylalkyl;
wherein each R³ and R⁴ independently represent hydrogen, or an alkyl;
wherein m represents 0 or 1; wherein n represents an integer from 1 to 10; and
ii. (A) and/or (B)
wherein (A) is a mercaptan of formula (II) 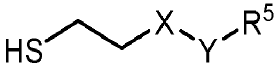
wherein R⁵ represents an alkyl or an arylalkyl;
wherein X represents a methylene or a carbonyl group; and
wherein Y represents methylene group or oxygen; and
wherein (B) is a diketone of formula (III) 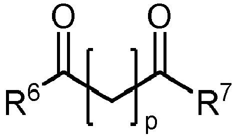
or a diketone of formula (IV) 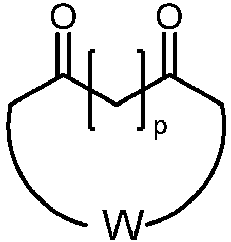
where p represents 0, 1 or 2; and
wherein each of R⁶ and R⁷ independently represent an alkyl, an aryl, or an arylalkyl; and wherein W represents an alkylene group, optionally substituted with one or more substituents selected from the group comprising an alkyl, - OH, and a halogen,
to mitigate or prevent skin formation in an oxidatively drying binder-based coating composition.

14. A drier and anti-skinning agent system for an oxidatively drying binder-based coating composition comprising:
a. a drying agent comprising an iron ligand complex and/or a manganese ligand complex;
b. an anti-skinning agent comprising a mercaptan of formula (II) 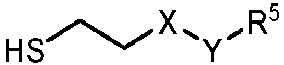
wherein R⁵ represents an alkyl or an arylalkyl;
wherein X represents a methylene or a carbonyl group; and
wherein Y represents methylene group or oxygen.

15. A drier and anti-skinning agent system according to any preceding claim, wherein the drier and anti-skinning agent system comprises 0.1 to 5 % by weight of the mercaptan of formula (II), based on the total solid weight of a coating composition.
